(19) Europäisches Patentamt
European Patent Office
Office européen des brevets

(11) **EP 3 385 640 A1**

(12) **EUROPEAN PATENT APPLICATION**
published in accordance with Art. 153(4) EPC

(43) Date of publication:
**10.10.2018 Bulletin 2018/41**

(51) Int Cl.:
**F25B 1/10** *(2006.01)*    **F25B 1/00** *(2006.01)*
**F25B 49/02** *(2006.01)*

(21) Application number: **17774866.2**

(22) Date of filing: **27.03.2017**

(86) International application number:
**PCT/JP2017/012258**

(87) International publication number:
**WO 2017/170329 (05.10.2017 Gazette 2017/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **28.03.2016  JP 2016063568**

(71) Applicant: **Mitsubishi Heavy Industries Thermal
Systems, Ltd.
Tokyo 108-8215 (JP)**

(72) Inventor: **MAENO Masashi
Tokyo 108-8215 (JP)**

(74) Representative: **Cabinet Beau de Loménie
158, rue de l'Université
75340 Paris Cedex 07 (FR)**

(54) **MULTISTAGE COMPRESSION DEVICE, REFRIGERATION CYCLE COMPRISING SAME, AND OPERATION METHOD FOR MULTISTAGE COMPRESSION DEVICE**

(57)    A multistage compression device (20) comprises a plurality of compression groups (20G) arranged in parallel in a circulation line. The compression groups (20G) comprise a plurality of compressors (21) arranged in series, and a series oil equalization line (34) that connects the plurality of compressors (21) to one another. Oil reservoirs (27) of the uppermost stream compressor (21A) of each compression group (20G) are connected to one another by a parallel oil equalization line (39). The end of the uppermost stream compressor (21A), in the parallel oil equalization line (39), which connects with the oil reservoir (27), is open at a position where the oil level is a prescribed level. A rotational frequency setting unit (102) of a control device (100) sets the rotational frequency for each of the plurality of uppermost stream compressors (21A) such that the pressure inside one of the uppermost stream compressors (21A) is less than the pressures inside all of the remaining uppermost stream compressors (21A).

FIG. 3

**Description**

Technical Field

The present invention relates to a multistage compression device, a refrigeration cycle comprising the same, and an operation method for a multistage compression device.
Priority is claimed on Japanese Patent Application No. 2016-063568, filed March 28, 2016, the content of which is incorporated herein by reference.

Background Art

In refrigeration cycles, a compression device is arranged in a circulation line through which a refrigerant circulates. As this compression device, there is a compression device in which a plurality of compressors are arranged in the circulation line.
As the compression device, for example, there is a device described in the following PTL 1. This compression device includes a plurality of low-pressure stage compressors arranged in parallel in a circulation line for a refrigerant, a high-pressure stage compressor arranged downstream of the plurality of low-pressure stage compressors, and an oil separator arranged downstream of the high-pressure stage compressor. Low-pressure ejection lines for the plurality of individual low-pressure stage compressors are connected to ejection ports of the plurality of low-pressure stage compressors. The plurality of low-pressure ejection lines are connected to a suction port of the high-pressure stage compressor. The plurality of low-pressure ejection lines have mutually different piping resistances. A high-pressure ejection line is connected to an ejection port of the high-pressure stage compressor. The aforementioned oil separator is provided in the high-pressure ejection line. The internal pressure of a low-pressure stage compressor to which an ejection line having the largest piping resistance is connected becomes the highest among the plurality of low-pressure stage compressors. The low-pressure stage compressor of which the internal pressure becomes the highest and the oil separator are connected to each other by an oil return line. Additionally, the plurality of high-pressure stage compressors are connected to one another by an oil equalization line.
The oil reserved in the oil separator returns into a low-pressure stage compressor with the highest internal pressure via the oil return line. A portion of the oil that has returned into this low-pressure stage compressor flows into a low-pressure stage compressor with the next higher internal pressure. A portion of the oil within this low-pressure stage compressor flows into a low-pressure stage compressor with the next higher internal pressure. After that, the oil sequentially flows into the low-pressure stage compressors with lower internal pressures. That is, in this multistage compression device, by providing a piping resistance difference between the low-pressure ejection lines connected to the plurality of lowermost stream low-pressure stage compressors, respectively, an internal pressure difference is caused between the plurality of low-pressure stage compressors, and the oil from the oil separator is sequentially fed to the low-pressure stage compressors with lower internal pressures due to this internal pressure difference.

Citation List

Patent Literature

[PTL 1] Japanese Unexamined Patent Application Publication No. 07-301465

Summary of Invention

Technical Problem

In the technique given in the above PTL 1, it is necessary to provide the ejection lines having mutually different piping resistances between the plurality of individual lowermost stream low-pressure stage compressors. Therefore, there are problems that the line configuration becomes complicated and facility costs increase. Moreover, since the piping resistances are purposely provided, there are also problems that, even in a steady operation, the individual loads on the plurality of low-pressure stage compressors become large and the running costs also increase.
Thus, an object of the invention is to provide a multistage compression device capable of adjusting the oil amounts of individual compressors to a predetermined oil amount while suppressing facility costs and running costs, a refrigeration cycle including the same, and an operation method for a multistage compression device.

Solution to Problem

A multistage compression device as one aspect related to the invention for solving the above problems includes a plurality of compression groups arranged in parallel in a circulation line for a refrigerant; a parallel oil equalization line that connects the plurality of compression groups to one another; and a control device. The plurality of compression groups each include a plurality of compressors arranged in series, an in-group coupling line that constitutes a portion of the circulation line to allow the refrigerant to flow therethrough, connects the plurality of compressors to one another, and is not connected to any compressors constituting other compression groups, a series oil equalization line that connects the plurality of compressors to one another, and a rotational frequency changer that is provided for each of the plurality of compressors and changes the rotational frequency of the compressor. The compressor has a compression part that compresses the refrigerant and has a rotational frequency changed by the rotational frequency changer, and a housing that covers the compression part and reserves oil required for driving of the compression part. The housing is formed with a suction port that suctions the refrigerant, an ejection port that ejects the refrigerant compressed by the compression part together with the oil, and an oil reservoir in which the oil is reserved. The series oil equalization line has a first end connected to the oil reservoirs for all the individual compressors excluding uppermost stream compressors among the plurality of compressors and has a second end connected to the oil reservoir of a compressor adjacent to an upstream side of a compressor serving as a connection source of the first end within the same compression group as the compressor serving as the connection source. The parallel oil equalization line connects the oil reservoirs in the uppermost stream compressors for the plurality of individual compression groups to one another. A connection end of the parallel oil equalization line connected to the oil reservoir of each of the uppermost stream compressors is open at a position where the amount of oil reserved in the oil reservoir becomes a predetermined amount between an upper limit value and a lower limit value. The control device has a rotational frequency setting unit that determines a rotational frequency or rotational frequencies of at least one of a rotational frequency of one uppermost stream compressor and rotational frequencies of all remaining uppermost stream compressors such that a pressure within the housing of the one uppermost stream compressor becomes lower than pressures within the housings of all the remaining the uppermost stream compressors for the plurality of individual uppermost stream compressors in a case where the oil is reserved up to a level above the opening in the oil reservoir of at least one uppermost stream compressor among the uppermost stream compressors for the plurality of individual compression groups, and a rotational frequency instruction unit that sequentially instructs the corresponding rotational frequency changers on the rotational frequency or rotational frequencies of the one compressor or the remaining uppermost stream compressors that are determined by the rotational frequency setting unit for each of the plurality of uppermost stream compressors.

In the multistage compression device, by sequentially bringing the insides of the plurality of uppermost stream compressors into low pressure, the oil amounts within all the uppermost stream compressors excluding the inside of the uppermost stream compressor that is the last to become a low pressure can be the predetermined amount, and the oil amount within the uppermost stream compressor that is the last to become a low pressure can also be the oil amount near the predetermined amount. That is, in the multistage compression device, by arranging the opening of the parallel oil equalization line at a predetermined position within the uppermost stream compressor, the oil amounts within the plurality of uppermost stream compressors can be adjusted to the predetermined amount with simple control and a simple line configuration.

Additionally, in the multistage compression device, the plurality of compressors constituting each compression group are connected to one another by the series oil equalization line. Thus, oil amount equalization can be achieved among the plurality of compressors constituting the compression group.

Here, in the above multistage compression device, the control device may have a storage unit in which, for all the individual compressors constituting the plurality of compression groups, a relationship between operational states of the compressors and outflow oil amounts per unit time of the oil including rotational frequencies of the compressors is stored, the rotational frequency setting unit may determine rotational frequencies of the plurality of individual compressors, using the relationship for the plurality of individual compressors constituting each compression group, such that an outflow oil amount of a downstream compressor among the plurality of compressors constituting each compression group decreases with respect to an outflow oil amount of an upstream compressor, and the rotational frequency instruction unit may instruct the corresponding rotational frequency changers, respectively, on the rotational frequencies of the plurality of individual compressors constituting each compression group, which are determined by the rotational frequency setting unit.

In the multistage compression device, the individual compressors are operated such that the outflow oil amount of the downstream compressor decreases with respect to the outflow oil amount of the upstream compressor. For this reason, in the multistage compression device, a situation in which the oil amount of the downstream compressor has the lower limit value before the oil amount of the upstream compressor reaches the lower limit value can be prevented. In other words, in the multistage compression device, in a case where the oil amount of any of the compressors reaches the lower limit value, the compressor becomes the upstream compressor. Additionally, in the oil return operation, the oil diffused into the circulation line returns into the upstream compressor before returning into the downstream compressor. Therefore, in the multistage compression device, even if the oil amount of any of the compressors reaches the lower limit value, the oil amount of the compressor of which the oil amount reaches the lower limit value can be recovered in a short time by oil return operation.

The multistage compression device of any of the above may further include an oil equalization valve that is provided for each of a plurality of the series oil equalization lines and adjusts a flow rate of the oil that flows through the series oil equalization line.

In a state where the oil reservoir of the downstream compressor and the oil reservoir of the upstream stage compressor are always communicating with each other by the series oil equalization line, the pressure within the downstream compressor always declines, and the compression efficiency in the high-pressure downstream compressor always declines. In the multistage compression device, by opening the oil equalization valve only when the need for feeding the oil, which is reserved within the downstream compressor, into the upstream compressor increases, the oil amount within the upstream compressor can be recovered, and a decline in the compression efficiency in the downstream compressor can be made temporary.

In the multistage compression device including the oil equalization valve, the control device may have an oil amount acquiring unit that acquires amounts of the oil reserved in the oil reservoirs for all the individual compressors excluding uppermost stream compressors among the plurality of compressors constituting each compression group, and an oil equalization valve instruction unit that gives an opening instruction to a target oil equalization valve provided in the series oil equalization line that connects the oil reservoir of the target compressor and the oil reservoir of a compressor adjacent to an upstream side of the target compressor to each other if an oil amount in the oil reservoir of a target compressor that is any compressor, among oil amounts of one or more compressors acquired in the oil amount acquiring unit, reaches a predetermined upper limit value.

In the multistage compression device, the oil amount within the upstream compressor can be recovered at a suitable timing at which the oil amount within the upstream compressor decreases.

The multistage compression device of any of the above may further include an oil separator that is provided for each of the plurality of compressors constituting each compression group and separates the oil from the refrigerant ejected from the compressor before the refrigerant ejected from the compressor flows into other compressors, and an oil return line that returns the oil separated by the oil separator into the housing of the compressor corresponding to the oil separator.

In the multistage compression device, a portion of the oil ejected together with the refrigerant from a compressor can be returned to the compressor via the oil separator. Thus, a decrease in oil amount of the compressor can be suppressed.

In the multistage compression device including the oil separator, an oil separation efficiency of the oil separator for a downstream compressor among the oil separators for the plurality of individual compressors constituting each compression group may be higher than an oil separation efficiency of an oil separator for an upstream compressor.

In the multistage compression device, the oil separation efficiency of the oil separator for the lowermost stream compressor is higher than the oil separation efficiencies of the oil separators for other compressors. For this reason, in the multistage compression device, the amount of the oil that flows out from a portion in the circulation line, through which the refrigerant for the multistage compression device flows, to the remaining portions in the circulation line can be effectively suppressed.

In the multistage compression device of any of the above, the control device may have an uppermost stream oil amount acquiring unit that acquires amounts of the oil reserved within the uppermost stream compressors for the plurality of individual compression groups, respectively, and an oil return operation instruction unit that instructs any device connected to the circulation line such that the oil in the circulation line is capable of returning into the plurality of uppermost stream compressors if an oil amount within at least one uppermost stream compressor among the oil amounts acquired by the uppermost stream oil amount acquiring unit reaches a predetermined lower limit value.

In the multistage compression device, if the oil return operation instruction unit instructs the device connected to the circulation line, the oil diffused into the circulation line can be returned into the uppermost stream compressor.

A refrigeration cycle as one aspect related to the invention for solving the above problems includes the multistage compression device of any of the above; a first heat exchanger that is arranged in the circulation line and allows heat exchange between the refrigerant flowing through the circulation line and a first medium to change the phase of the refrigerant; a second heat exchanger that is arranged in the circulation line, allows heat exchange between the refrigerant flowing through the circulation line and a second medium to change the phase of the refrigerant; and an expansion valve that is arranged at a portion in the circulation line where the multistage compression device is not arranged between the first heat exchanger and the second heat exchanger, in the circulation line between the first heat exchanger and the second heat exchanger.

An operation method for a multistage compression device as one aspect related to the invention for solving the above problems is an operation method for a multistage compression device as follows.

The multistage compression device includes a plurality of compression groups arranged in parallel in a circulation line for a refrigerant, and a parallel oil equalization line that connects the plurality of compression groups to one another. The plurality of compression groups each include a plurality of compressors arranged in series, an in-group coupling line that constitutes a portion of the circulation line to allow the refrigerant to flow therethrough, connects the plurality of compressors to one another, and is not connected to any compressors constituting other compression groups, a series oil equalization line that connects the plurality of compressors to one another, and a rotational frequency changer that is provided for each of the plurality of compressors and changes the rotational frequency of the compressor. The plurality of compressors each have a compression part that compresses the refrigerant and has a rotational frequency changed by the rotational frequency changer, and a housing that covers the compression part and reserves oil required for driving of the compression part. The housing is formed with a suction port that suctions the refrigerant, an ejection port that ejects the refrigerant compressed by the compression part together with the oil, and an oil reservoir in which the oil is reserved. The series oil equalization line has a first end connected to the oil reservoirs for all the individual compressors excluding uppermost stream compressors among the plurality of compressors and has a second end connected to the oil reservoir of a compressor adjacent to an upstream side of a compressor serving as a connection source of the first end within the same compression group as the compressor serving as the connection source. The parallel oil equalization line connects the oil reservoirs in the uppermost stream compressors for the plurality of individual compression groups to one another.

The operation method for a multistage compression device makes a connection end of the parallel oil equalization line connected to the oil reservoir of each of the uppermost stream compressors be open at a position where the amount of oil reserved in the oil reservoir becomes a predetermined amount between an upper limit value and a lower limit value, and executes a rotational frequency setting step of determining a rotational frequency or rotational frequencies of at least one of a rotational frequency of one uppermost stream compressor and rotational frequencies of all remaining uppermost stream compressors such that a pressure within the housing of the one uppermost stream compressor become lower than pressures within the housings of all the remaining the uppermost stream compressors for the plurality of individual uppermost stream compressors in a case where the oil is reserved up to a level above the opening in the oil reservoir of at least one uppermost stream compressor among the uppermost stream compressors for the plurality of individual compression groups, and a rotational frequency instruction step that sequentially instructs the corresponding rotational frequency changers on the rotational frequency or rotational frequencies of the one compressor or the remaining uppermost stream compressors that are determined in the rotational frequency setting step for each of the plurality of uppermost stream compressors.

Here, the operation method for a multistage compression device may further execute a series rotational frequency setting step of determining rotational frequencies of the plurality of individual compressors, using a relationship between operational states of the compressors and outflow oil amounts per unit time of the oil including rotational frequencies of the compressors, for all the individual compressors constituting the plurality of compression groups, such that an outflow oil amount of a downstream compressor among the plurality of compressors constituting each compression group decreases with respect to an outflow oil amount of an upstream compressor; and a rotational frequency instruction step of instructing the corresponding rotational frequency changers, respectively, on the rotational frequencies of the plurality of individual compressors constituting each compression group, which are determined in the series rotational frequency setting step.

Additionally, the operation method for a multistage compression device may further execute an uppermost stream oil amount acquiring step of acquiring amounts of the oil reserved within the plurality of uppermost stream compressors, respectively, and an oil return operation instruction step of instructing any device connected to the circulation line such that the oil in the circulation line is capable of returning into the plurality of uppermost stream compressors if an oil amount within at least one uppermost stream compressor among the oil amounts acquired in the uppermost stream oil amount acquiring step reaches a predetermined lower limit value.

Advantageous Effects of Invention

In the aspect of the invention, the oil amounts of the individual compressors can be adjusted to predetermined oil amounts while suppressing facility costs and running costs.

Brief Description of Drawings

Fig. 1 is a system diagram of a refrigeration cycle in an embodiment related to the invention.
Fig. 2 is a system diagram of a multistage compression device in the embodiment related to the invention.
Fig. 3 is a system diagram of a compression group in the embodiment related to the invention.

Fig. 4 is a functional block diagram of a control device in the embodiment related to the invention.

Fig. 5 is an illustrative view for illustrating relationship information in the embodiment related to the invention.

Fig. 6 is a graph illustrating a relationship between superheat degree and ejection oil amount of an oil reservoir.

Fig. 7 is a flowchart illustrating the operation of the control device in the embodiment related to the invention.

Fig. 8 is an illustrative view illustrating oil amount changes within a high-pressure stage compressor and oil amount changes of a low-pressure stage compressor in the embodiment related to the invention.

Fig. 9 is an illustrative view illustrating a state where one of a plurality of low-pressure stage compressors in embodiment related to the invention is brought into a state where the oil amount of the low-pressure stage compressor has a lower limit value.

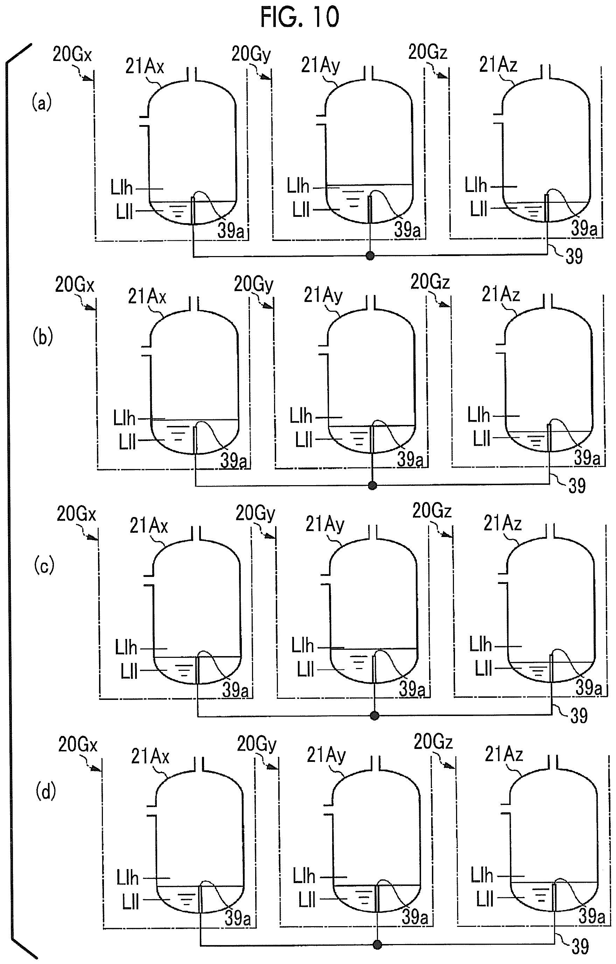

Fig. 10 is an illustrative view illustrating oil amount changes within the plurality of low-pressure stage compressors in the embodiment related to the invention. (a) of Fig. 10 is an illustrative view illustrating oil amounts within the plurality of low-pressure stage compressors immediately after an oil return processing step. (b) of Fig. 10 is an illustrative view illustrating oil amounts within the plurality of low-pressure stage compressors when the inside of a first low-pressure stage compressor is brought to a low pressure. (c) of Fig. 10 is an illustrative view illustrating oil amounts within the plurality of low-pressure stage compressors when the inside of a second low-pressure stage compressor is brought to a low pressure. (d) of Fig. 10 is an illustrative view illustrating oil amount within the plurality of low-pressure stage compressors when the inside of a third low-pressure stage compressor is brought to a low pressure.

Fig. 11 is a system diagram of the multistage compression device in a modification example of the embodiment related to the invention.

Description of Embodiments

Hereinafter, embodiments and modification examples related to the invention will be described in detail with reference to the drawings.

[Embodiment]

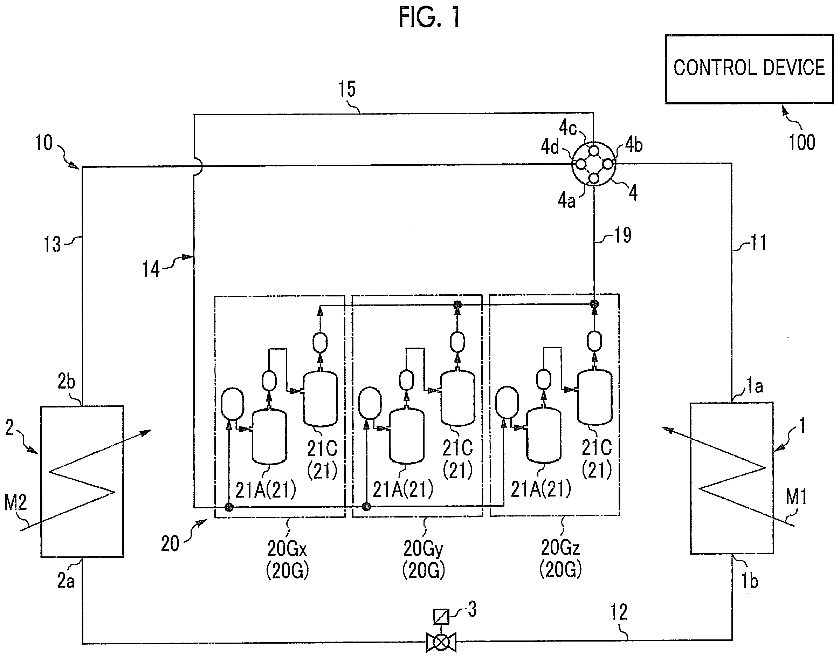

An embodiment of a refrigeration cycle related to the invention will be described with reference to Figs. 1 to 10.

As illustrated in Fig. 1, the refrigeration cycle of the present embodiment includes a first heat exchanger 1, a second heat exchanger 2, an expansion valve 3, a four-way switching valve 4, a circulation line 10, a multistage compression device 20, and a control device 100.

The first heat exchanger 1, the second heat exchanger 2, the expansion valve 3, the four-way switching valve 4, and the multistage compression device 20 are all provided in the circulation line 10 through which a refrigerant R flows. The first heat exchanger 1 exchanges heat between the refrigerant R and a first medium M1 to change the phase of the refrigerant R. The second heat exchanger 2 exchanges heat between the refrigerant R and a second medium M2 to change the phase of the refrigerant R. The first heat exchanger 1 has a first refrigerant port 1a and a second refrigerant port 1b. Additionally, the second heat exchanger 2 also has a first refrigerant port 2a and a second refrigerant port 2b. The multistage compression device 20 compresses a gaseous refrigerant R. The expansion valve 3 reduces the pressure of a liquid refrigerant R. The four-way switching valve 4 has four ports, and is capable of selectively changing the flow of the refrigerant R between the individual ports. The four-way switching valve 4 selectively takes a first connection form and a second connection form, thereby changing the flow of the refrigerant R between the individual ports. The first connection form is a form in which a first port 4a and a second port 4b are connected to each other and a third port 4c and a fourth port 4d are connected to each other. Additionally, the second connection form is a form in which the second port 4b and the third port 4c are connected to each other and the fourth port 4d and the first port 4a are connected to each other.

The circulation line 10 has a compression line 14 constituting a portion of the multistage compression device 20, a first line 11 connected to the first refrigerant port 1a of the first heat exchanger 1, a second line 12 connected to the first refrigerant port 2a of the second heat exchanger 2, and a third line 13 connected to the second refrigerant port 2b of the second heat exchanger 2. A low-pressure end, in other words, an upstream end of the compression line 14 is connected to the third port 4c of the four-way switching valve 4. A high-pressure end, in other words, a downstream end of the compression line 14 is connected to the first port 4a of the four-way switching valve 4. One end out of two ends of the first line 11 is connected to the second port 4b of the four-way switching valve 4, and the other end thereof is connected to the first refrigerant port 1a of the first heat exchanger 1 as mentioned above. One end out of two ends of the second line 12 is connected to the second refrigerant port 1b of the first heat exchanger 1, and the other end thereof is connected to the first refrigerant port 2a of the second heat exchanger 2 as mentioned above. One end out of two ends of the third line 13 is connected to the second refrigerant port 2b of the second heat exchanger 2 as mentioned above, and the other end thereof is connected to the fourth port 4d of the four-way switching valve 4.

The second refrigerant port 1b of the first heat exchanger 1 and the first refrigerant port 2a of the second heat exchanger 2 are connected to each other by the second line 12 as mentioned above. Additionally, the second refrigerant port 2b of the second heat exchanger 2 and the first refrigerant port 1a of the first heat exchanger 1 are connected to each other by the third line 13, the compression line 14, and the first line 11. The expansion valve 3 is arranged in the second line 12. Therefore, this expansion valve 3 is arranged in the circulation line 10 between the first heat exchanger 1 and the second heat exchanger 2 and in the circulation line 10 where the multistage compression device 20 is not arranged between the first heat exchanger 1 and the second heat exchanger 2.

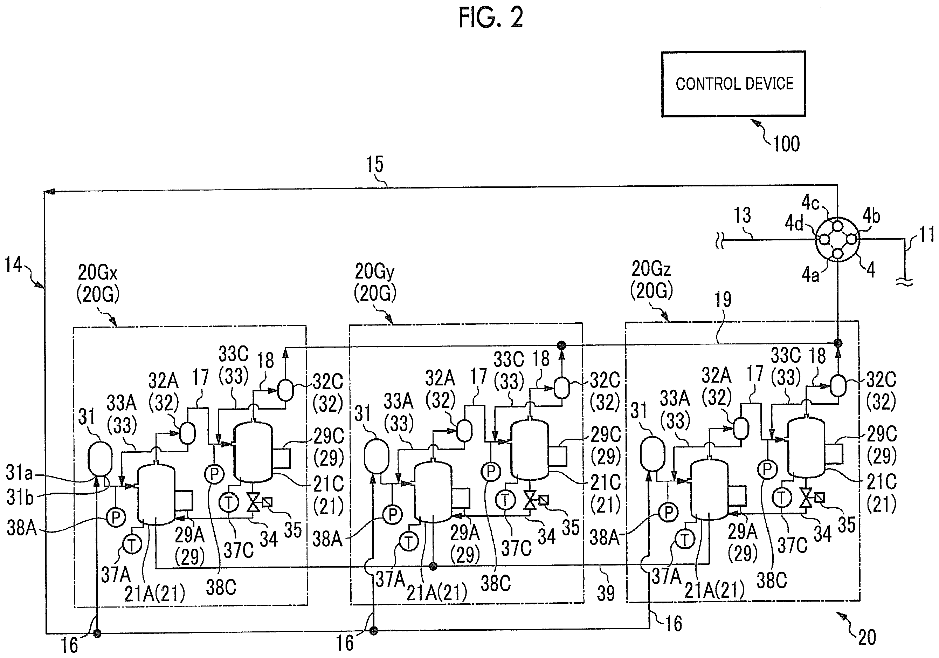

As illustrated in Fig. 2, the multistage compression device 20 includes a plurality of compression groups 20G, a parallel oil equalization line 39 that connects the plurality of compression groups 20G to one another, and the aforementioned compression line 14.

The plurality of compression groups 20G each include an accumulator 31, a low-pressure stage compressor 21A, a high-pressure stage compressor 21C, a low-pressure-side rotational frequency changer 29A, a high-pressure-side rotational frequency changer 29C, a low-pressure oil separator 32A, a high-pressure oil separator 32C, a portion of the aforementioned compression line 14, a low-pressure oil return line 33A, a high-pressure oil return line 33C, a series oil equalization line 34, and an oil equalization valve 35. In addition, in the present embodiment, the uppermost stream compressor is the low-pressure stage compressor 21A.

The accumulator 31 temporarily reserves the refrigerant R and has a function of separating a liquid-phase refrigerant R and a gas-phase refrigerant R from each other. A refrigerant inlet 31a and a refrigerant outlet 31b are formed in the accumulator 31.

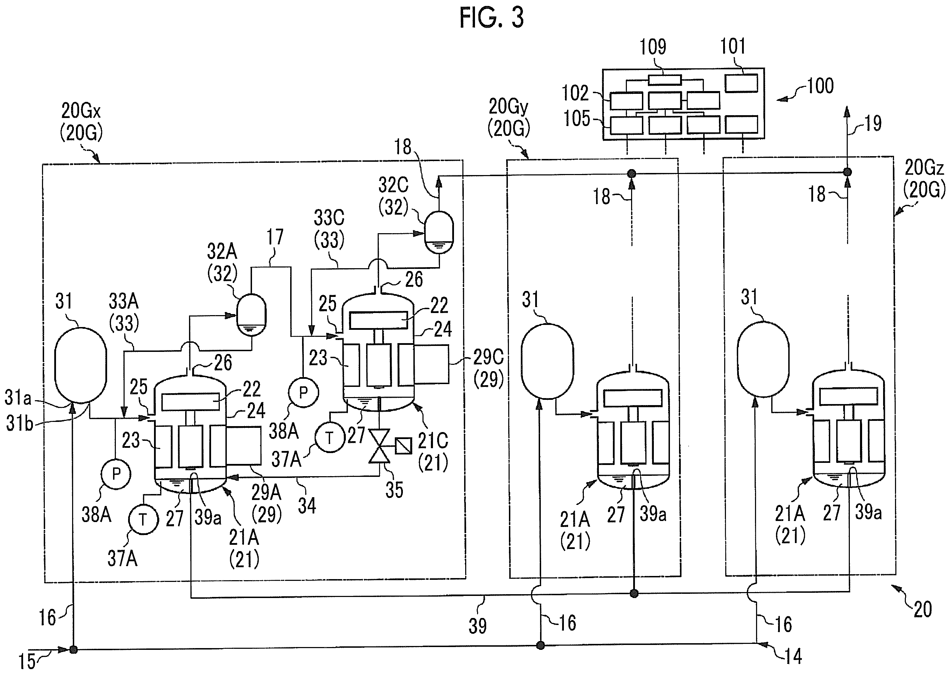

As illustrated in Fig. 3, Both of the low-pressure stage compressor 21A and the high-pressure stage compressor 21C have a compression part 22 that compresses the refrigerant R, a motor 23 that rotates the compression part 22, and a housing 24 that covers these. The compression part 22 is of, for example, a rotary type. The housing 24 has a trunk part that is cylindrical about a central axis extending in an upward-downward direction, and a mirror part that closes openings of both ends the cylindrical trunk part. A suction port 25 is formed in the trunk part of the housing 24, and an ejection port 26 is formed in the mirror part on the housing 24. A lower part within the housing 24 including the inside of a lower mirror part of the housing 24 constitutes an oil reservoir 27 (lower dome part) in which oil O required in order to actuate the motor 23 and the compression part 22 is reserved. The low-pressure-side rotational frequency changer 29A changes the rotational frequency of the motor 23 of the low-pressure stage compressor 21A. The high-pressure-side rotational frequency changer 29C changes the rotational frequency of the motor 23 of the high-pressure stage compressor 21C. Each of the rotational frequency changers 29A and 29C is, for example, an inverter that changes the frequency of AC power to be supplied to the motor 23.

The low-pressure oil separator 32A catches a portion of the oil O ejected together with the refrigerant R from the low-pressure stage compressor 21A. The high-pressure oil separator 32C catches a portion of the oil O ejected together with the refrigerant R from the high-pressure stage compressor 21C. That is, each of the oil separators 32A and 32C separates the oil O from a fluid ejected from the compressors 21A and 21C. The oil separation efficiency of the high-pressure oil separator 32C is higher than the oil separation efficiency of the low-pressure oil separator 32A.

As a portion of the compression line 14, there are a suction line 16, a low-pressure ejection line 17, and a high-pressure ejection line 18. The suction line 16, the low-pressure ejection line 17, and the high-pressure ejection line 18 are provided for each of the plurality of compression groups 20G. One end out of two ends of the suction line 16 is connected to the suction port 25 of the low-pressure stage compressor 21A. The accumulator 31 is arranged in the suction line 16. One end out of two ends of the low-pressure ejection line 17 (in-group coupling line) is connected to the ejection port 26 of the low-pressure stage compressor 21A, and the other end thereof is connected to a suction portion 25 of the high-pressure stage compressor 21C. The low-pressure ejection line 17 is also not connected to any of compressors 21 constituting the other compression groups 20G. One end out of two ends of the high-pressure ejection line 18 is connected to the ejection port 26 of the high-pressure stage compressor 21C.

The low-pressure oil separator 32A is arranged in the low-pressure ejection line 17. The high-pressure oil separator 32C is arranged in the high-pressure ejection line 18. One end out of two ends of the low-pressure oil return line 33A is connected to the low-pressure oil separator 32A, and the other end thereof is connected to the suction line 16. One end out of two ends of the high-pressure oil return line 33C is connected to the high-pressure oil separator 32C, and the other end thereof is connected to the low-pressure ejection line 17. One end out of two ends of the series oil equalization line 34 is connected to the oil reservoir 27 of the high-pressure stage compressor 21C, and the other end thereof is connected to the oil reservoir 27 of the low-pressure stage compressor 21A. The oil equalization valve 35 is provided in the series oil equalization line 34.

The plurality of compression groups 20G each further includes a low-pressure-side thermometer 37A, a high-pressure-side thermometer 37C, a low-pressure-side pressure gauge 38A, and a high-pressure-side pressure gauge 38C. The low-pressure-side thermometer 37A detects the temperature of the oil O reserved in the oil reservoir 27 of the low-pressure stage compressor 21A. The high-pressure-side thermometer 37C detects the temperature of the oil O reserved in the oil reservoir 27 of the high-pressure stage compressor 21C. The low-pressure-side pressure gauge 38A detects the pressure of the refrigerant R suctioned by the low-pressure stage compressor 21A, that is, the pressure within the suction line 16. The high-pressure-side pressure gauge 38C detects the pressure of the refrigerant R suctioned by the high-pressure stage compressor 21C, that is, the pressure within the low-pressure ejection line 17.

As illustrated in Fig. 3, the compression line 14 constituting a portion of the multistage compression device has a shared suction line 15 and a shared ejection line 19 in addition to the aforementioned suction line 16, low-pressure ejection line 17, and high-pressure ejection line 18 constituting portions of each compression group 20G. One end out of two ends of the shared suction line 15 is connected to the third port 4c of the four-way switching valve 4. The other end out of the aforementioned two ends in the suction line 16 for each of the plurality of compression groups 20G is connected to the other end of the shared suction line 15. One end out of two ends of the shared ejection line 19 is connected to the first port 4a of the four-way switching valve 4. The other end out of the aforementioned two ends in the high-pressure ejection line 18 for each of the plurality of compression groups 20G is connected to the other end of the shared ejection line 19.

The parallel oil equalization line 39 connects the oil reservoirs 27 in the low-pressure stage compressors 21A of the plurality of individual compression groups 20G to one another. An end of the parallel oil equalization line 39 connected to each oil reservoir 27 is open. The position of the opening 39a is a position where the amount of the oil reserved in the oil reservoir 27 is a predetermined amount between an upper limit value Llh and a lower limit value Lll.

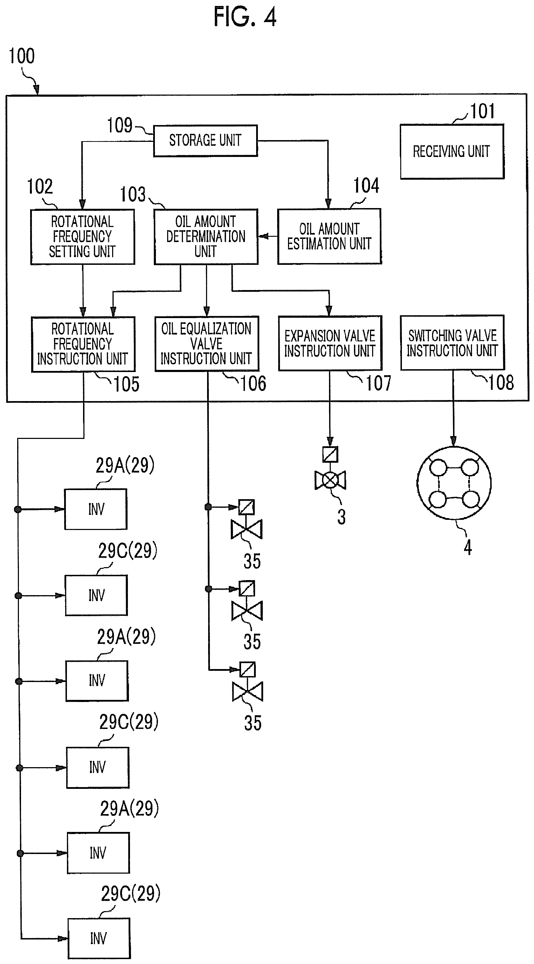

As illustrated in Fig. 4, the control device 100 has a receiving unit 101, a rotational frequency setting unit 102, an oil amount estimation unit 104, an oil amount determination unit 103, a rotational frequency instruction unit 105, an oil equalization valve instruction unit 106, an expansion valve instruction unit 107, a switching valve instruction unit 108, and a storage unit 109 as its functional components. The control device 100 has a computing unit that executes various kinds of computation, a main storage unit, such as a memory that temporarily stores various programs, various kinds of data, and the like, an auxiliary storage unit such as a hard disk drive device that stores various programs, various kinds of data, and the like, and an interface circuit that outputs and performs input of data and the like with the outside, as its hardware components. The receiving unit 101, the rotational frequency instruction unit 105, the oil equalization valve instruction unit 106, the expansion valve instruction unit 107, and the switching valve instruction unit 108 each are configured to have an interface circuit, a main storage unit, and a computing unit that executes a program stored in the main storage unit. The rotational frequency setting unit 102, the oil amount estimation unit 104, and the oil amount determination unit 103 are each configured to have a main storage unit and a computing unit that executes a program stored in the main storage unit. The storage unit 109 is configured to a main storage unit and an auxiliary storage unit.

The receiving unit 101 receives various kinds of information, instructions, and the like. The receiving unit 101 receives the temperature detected by the low-pressure-side thermometer 37A, the temperature detected by the high-pressure-side thermometer 37C, the pressure detected by the low-pressure-side pressure gauge 38A, and the pressure detected by the high-pressure-side pressure gauge 38C. The rotational frequency setting unit 102 sets the rotational frequency for the motor 23 of each of the compressors 21A and 21C. The oil amount estimation unit 104 estimates the amount of the oil reserved in the oil reservoir 27 of each of the compressors 21A and 21C. The oil amount determination unit 103 determines whether or not the amount of the oil reserved in the oil reservoir 27 of each of the compressors 21A and 21C has reached the upper limit value or the lower limit value. The rotational frequency instruction unit 105 instructs the corresponding rotational frequency changers 29A and 29C on the rotational frequencies of the individual compressors 21A and 21C. The oil equalization valve instruction unit 106 instructs the oil equalization valve 35 on the opening and closing of the valve. The expansion valve instruction unit 107 instructs the expansion valve 3 on the valve opening degree of the valve. The switching valve instruction unit 108 instructs the four-way switching valve 4 on the first connection form or the second connection form as a connection form between the ports.

Information required to set the rotational frequency of the motor 23 of each of the compressors 21A and 21C for each of the plurality of compression groups 20G with the rotational frequency setting unit 102 is stored in the storage unit 109. The information stored in the storage unit 109 is relationship information among an initial oil amount Lls or Lhs of the oil reservoir 27 in each of the compressors 21A and 21C and an oil amount Llr or Lhr after oil return operation, rotational frequency N of each of the compressors 21A and 21C, and an outflow oil amount FO of the oil O per unit time.

The initial oil amount Lhs or Lls is the amount of the oil reserved in the oil reservoir 27 at the time of product forwarding, or an oil amount immediately after the oil O is supplied from the outside. Additionally, the oil amount Lhr or Llr after the oil return operation is the amount of the oil reserved in the oil reservoir 27 immediately after an oil return step to be described below.

The relationship information among the rotational frequency N of each of the two compressors 21A and 21C and the outflow oil amount FO of the oil O from each of the compressors 21A and 21C per unit time will be described.

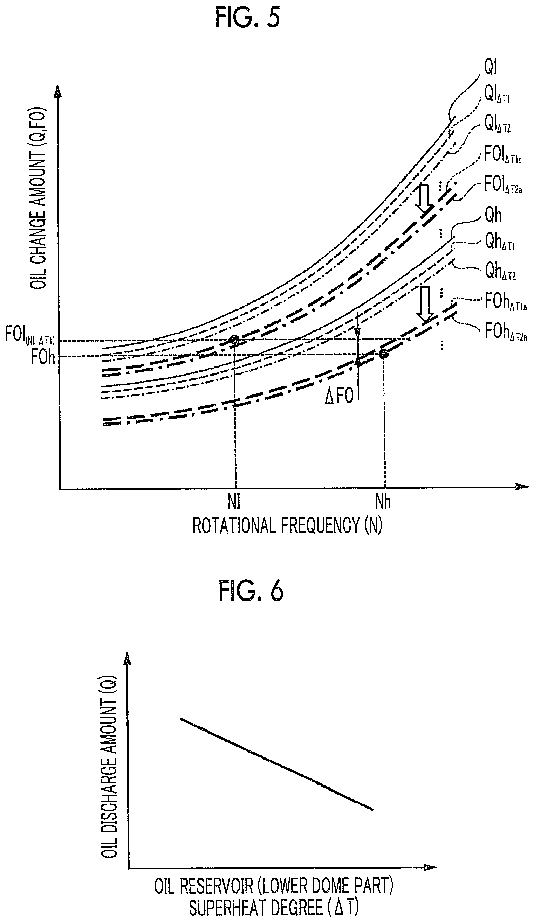

As illustrated in Fig. 5, the amount Q of the oil O per unit time from the ejection port 26 of each of the compressors 21A and 21C, that is, an ejection oil amount per unit time increases with an increase in the rotational frequency N of each of the compressors 21A and 21C. In addition, in Fig. 5, Ql represents an ejection oil amount per unit time of the low-pressure stage compressor 21A, and Qh represents an ejection oil amount per unit time of the high-pressure stage compressor 21C.

Additionally, as illustrated in Fig. 6, the ejection oil amount Q decreases with an increase in a superheat degree $\Delta T$ of the oil reservoir 27 (lower dome part). Thus, in the present embodiment, as illustrated in Fig. 5, the ejection oil amount Q according to the rotational frequency N is corrected in accordance with the superheat degree $\Delta T$ of the oil reservoir 27, and this is defined as an ejection oil amount $Q\Delta T$ after correction. In addition, in Fig. 5, $Ql_{\Delta T1}$ represents an ejection oil amount per unit time of the low-pressure stage compressor 21A at the time of a superheat degree $\Delta T1$, and $Q_{\Delta T2}$ represents an ejection oil amount per unit time of the low-pressure stage compressor 21A at the time of a superheat degree $\Delta T2$. Additionally, $Qh_{\Delta T1}$ represents an ejection oil amount per unit time of the high-pressure stage compressor 21C at the time of the superheat degree $\Delta T1$, and $Qh_{\Delta T1}$ represents an ejection oil amount per unit time of the high-pressure stage compressor 21C at the time of the superheat degree $\Delta T2$.

Here, the superheat degree $\Delta T$ of the oil reservoir 27 is the temperature distribution of a temperature Td of the oil reservoir 27 with respect to compressor suction saturated temperature (CSST), as shown in the following Equation (1).

$$\Delta T = Td - CSST \qquad (1)$$

In the present embodiment, the oil separator 32A or 32C is provided on the ejection side of each of the compressors 21A and 21C. A portion of the oil O ejected from the compressor 21 is trapped by the oil separator 32. The oil O trapped by the oil separator 32 returns from the suction port 25 of the compressor 21 to the oil reservoir 27 of the compressor 21 via the oil return line 33. For this reason, the outflow oil amount FO per unit time from a system including the compressor 21 and the oil separator 32 is the amount of the oil O, which is not trapped by the oil separator 32, in the oil O ejected from the ejection port 26 of the compressor 21. Thus, in the present embodiment, as shown in the following Equation (2), the ejection oil amount $Q\Delta T$ is corrected at an oil separation efficiency a of an oil separator (< 1), and this is defined as the outflow oil amount FO per unit time. In addition, in Fig. 5, $FOl_{\Delta T1a}$ represents an outflow oil amount per unit time of the low-pressure stage compressor 21A at the time of the superheat degree $\Delta T1$, and $FOl_{\Delta t2a}$ represents an outflow oil amount per unit time of the low-pressure stage compressor 21A at the time of the superheat degree $\Delta T2$. Additionally, $FOh_{\Delta T1a}$ represents an outflow oil amount per unit time of the high-pressure stage compressor 21C at the time of the superheat degree $\Delta T1$, and $FOh_{\Delta T2a}$ represents an outflow oil amount per unit time of the high-pressure stage compressor 21C at the time of the superheat degree $\Delta T2$.

$$FO = Q\Delta T \times (1 - a) \qquad (2)$$

In the present embodiment, the relationship information of each set of the plurality of compressors 21A and 21C are the outflow oil amounts $FOl_{\Delta T1a}$, $FOl_{\Delta T2a}$, ..., $FOh_{\Delta T1a}$, $FOh_{\Delta T2a}$, and ... according to the rotational frequency N, the superheat degree $\Delta T$, and the oil separation efficiency a. That is, in the present embodiment, as shown in the following Equation (3) in each set of the plurality of compressor 21A and 21C, the relationship information among the outflow oil amount FO per unit time, the rotational frequency N of the compressor 21, the superheat degree $\Delta T$ of the oil reservoir 27, and the oil separation efficiency a of the oil separator 32 are stored in the storage unit 109.

$$FO = g(N, \Delta T, a) \qquad (3)$$

The oil separation efficiency a of the oil separator 32 among a plurality of parameters constituting the relationship information is a fixed value. Therefore, the outflow oil amount FO per unit time, the rotational frequency N of a compressor and the superheat degree $\Delta T$ of the oil reservoir 27 among the plurality of parameters constituting the relationship information are treated as variables.

The relationship information $FOl_{\Delta T1a}$, $FOl_{\Delta T2a}$, ..., $FOh_{\Delta T1a}$, $FOh_{\Delta T2a}$, and ... described above is stored in a map form or function form in the storage unit 109.

As described above, the control device 100, which is a constituent element of the refrigeration cycle, controls the individual devices of the multistage compression device 20. Therefore, the control device 100 is also a constituent element of the multistage compression device 20.

Next, the operation of a refrigeration cycle will be described.

First, the basic operation of the refrigeration cycle when the four-way switching valve 4 has the first connection form will be described. In addition, as mentioned above, the first connection form is the form in which the first port 4a and the second port 4b are connected to each other and the third port 4c and the fourth port 4d are connected to each other.

As illustrated in Fig. 1, the gaseous refrigerant R compressed in each compression group 20G of the multistage compression device 20 flows into the first heat exchanger 1 through the first port 4a and the second port 4b of the four-way switching valve 4, and the first line 11. The gaseous refrigerant R exchanges heat with the first medium M1 in the first heat exchanger 1. As a result, the first medium M1 is heated. Meanwhile, the gaseous refrigerant R is cooled and condensed, and turned into a liquid refrigerant R. Therefore, the first heat exchanger 1 functions as a condenser when the four-way switching valve 4 has the first connection form.

The refrigerant R liquefied by the first heat exchanger 1 flows into the second heat exchanger 2 through the second line 12. The refrigerant R is decompressed by the expansion valve 3 arranged in the second line 12 in the process of flowing through the second line 12.

The liquid refrigerant R exchanges heat with the second medium M2 in the second heat exchanger 2. As a result, the second medium M2 is cooled. Meanwhile, the liquid refrigerant R is heated and gasified, and turned into a gaseous refrigerant R. Therefore, the second heat exchanger 2 functions as an evaporator when the four-way switching valve 4 has the first connection form.

The refrigerant R gasified by the second heat exchanger 2 flows into the shared suction line 15 of the multistage compression device 20 through the third line 13, and the fourth port 4d and the third port 4c of the four-way switching valve 4. The gaseous refrigerant R flows into the individual suction lines 16 of the plurality of individual compression groups 20G, as illustrated in Figs. 2 and 3, through the shared suction line 15. The refrigerant R flows into and then flows out of the accumulator 31 in the process of flowing through the suction line 16. There is a case where a mist-like liquid refrigerant R slightly remains in the gaseous refrigerant R. In the accumulator 31, the liquid refrigerant R is separated out of the gaseous refrigerant R, and the gaseous refrigerant R is ejected.

The gaseous refrigerant R from the accumulator 31 flows into the low-pressure stage compressor 21A from the suction port 25 of the low-pressure stage compressor 21A belonging to the same compression group 20G as the suction line 16 through the suction line 16. The refrigerant R, which has flowed into the low-pressure stage compressor 21A, is compressed by the compression part 22 of the low-pressure stage compressor 21A, and then ejected from the ejection port 26 of the low-pressure stage compressor. In this case, a portion of the oil O within the low-pressure stage compressor 21A is also ejected from the ejection port 26.

The refrigerant R and the oil O ejected from the low-pressure stage compressor 21A flows into the high-pressure stage compressor 21C from the suction port 25 of the high-pressure stage compressor 21C belonging to the same compression group 20G as the low-pressure stage compressor 21A, through the low-pressure ejection line 17 belonging to the same compression group 20G as the low-pressure stage compressor 21A. In the process of flowing through the low-pressure ejection line 17, a portion of the oil O is trapped by the low-pressure oil separator 32A provided in the low-pressure ejection line 17, that is, the low-pressure oil separator 32A belonging to the same compression group 20G as the low-pressure stage compressor 21A. The oil O trapped by the low-pressure oil separator 32A returns into the low-pressure stage compressor 21A through the low-pressure oil return line 33A and the suction line 16.

The refrigerant R, which has flowed into the high-pressure stage compressor 21C, is compressed by the compression part 22 of the high-pressure stage compressor 21C. Meanwhile, a portion of the oil O, which has flowed into the high-pressure stage compressor 21C, is reserved in the oil reservoir 27 of the high-pressure stage compressor 21C. The refrigerant R compressed by the compression part 22 is ejected from the ejection port 26 of the high-pressure stage compressor 21C. In this case, a portion of the oil O within the high-pressure stage compressor 21C is also ejected from the ejection port 26.

The refrigerant R and the oil O ejected from the high-pressure stage compressor 21C flow through the high-pressure ejection line 18 belonging to the same group. In the process of flowing through the high-pressure ejection line 18, a portion of the oil O is trapped by the high-pressure oil separator 32C provided in the high-pressure ejection line 18, that is, the high-pressure oil separator 32C belonging to the same compression group 20G as the high-pressure stage compressor 21C. The oil O trapped by the high-pressure oil separator 32C returns into the high-pressure stage compressor 21C through the high-pressure oil return line 33C and the low-pressure ejection line 17.

The refrigerant R and the oil O, which have passed through high-pressure oil separator 32C, flow into the shared ejection line 19 through the high-pressure ejection line 18. The refrigerant R and the oil O from the individual high-pressure ejection lines 18 of the plurality of individual compression groups 20G join the shared ejection line 19. The refrigerant R and the oil O, which have flowed into the shared ejection line 19, flow into the first heat exchanger 1 through the first port 4a and the second port 4b of the four-way switching valve 4, and the first line 11.

As described above, the refrigeration cycle of the present embodiment moves the heat of the second medium M2 to the first medium M1 via the refrigerant R when the four-way switching valve 4 has the first connection form.

Next, the basic operation of the a refrigeration cycle when the four-way switching valve 4 has the second connection form will be described. In addition, as mentioned above, the second connection form is the form in which the second port 4b and the third port 4c are connected to each other and the fourth port 4d and the first port 4a are connected to each other.

As illustrated in Fig. 1, the gaseous refrigerant R compressed in each compression group 20G of the multistage compression device 20 flows into the second heat exchanger 2 through the first port 4a and the fourth port 4d of the four-way switching valve 4, and the third line 13. The gaseous refrigerant R exchanges heat with the second medium M2 in the second heat exchanger 2. As a result, the second medium M2 is heated. Meanwhile, the gaseous refrigerant R is cooled and condensed, and turned into a liquid refrigerant R. Therefore, the second heat exchanger 2 functions as a condenser when the four-way switching valve 4 has the second connection form.

The refrigerant R liquefied by the second heat exchanger 2 flows into the first heat exchanger 1 through the second line 12. The refrigerant R is decompressed by the expansion valve 3 arranged in the second line 12 in the process of flowing through the second line 12.

The liquid refrigerant R exchanges heat with the first medium M1 in the first heat exchanger 1. As a result, the first medium M1 is cooled. Meanwhile, the liquid refrigerant R is heated and gasified, and turned into a gaseous refrigerant R. Therefore, the first heat exchanger 1 functions as an evaporator when the four-way switching valve 4 has the second connection form.

The refrigerant R gasified by the first heat exchanger 1 flows into the shared suction line 15 of the multistage compression device 20 through the first line 11, and the second port 4b and the third port 4c of the four-way switching valve 4. The refrigerant R, which has flowed into the shared suction line 15, is compressed by the multistage compression device 20, similarly to when the four-way switching valve 4 has the first connection form.

As described above, the refrigeration cycle of the present embodiment moves the heat of the first medium M1 to the second medium M2 via the refrigerant R when the four-way switching valve 4 has the second connection form.

In the present embodiment, the four-way switching valve 4 has the first connection form or the second connection form by the receiving unit 101 receiving an instruction to cool or heat the first medium M1.

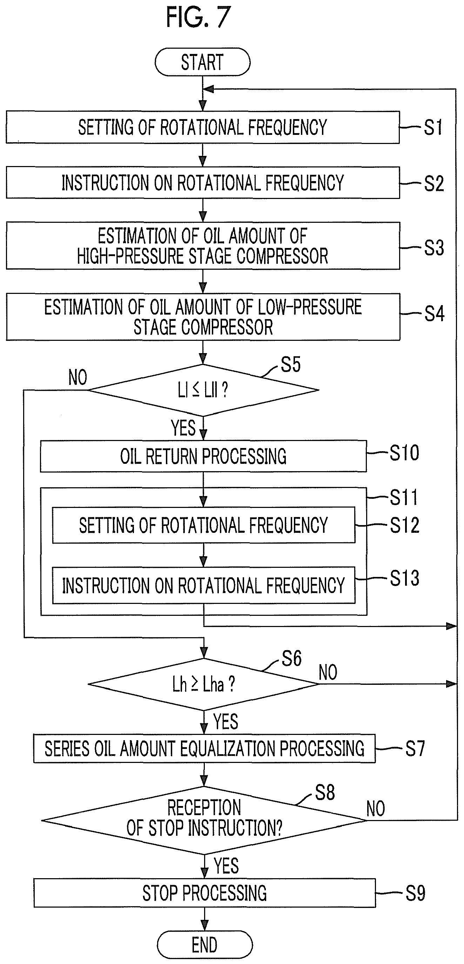

Next, detailed operation of the multistage compression device 20 will be described with reference to a flowchart illustrated in Fig. 7.

If the receiving unit 101 of the control device 100 receives a start instruction, the individual devices of the multistage compression device 20 starts to operate. This start instruction includes an instruction on the target temperature or the like of a first refrigerant R, in addition to the instruction to cool or heating the first medium M1.

If the receiving unit 101 receives the start instruction, the rotational frequency setting unit 102 determines the rotational frequency of the low-pressure stage compressor 21A and the rotational frequency of the high-pressure stage compressor 21C for each of the plurality of compression groups 20G in accordance to the target temperature or the like of the first refrigerant R, the superheat degree $\Delta T$ or the like of the compressor 21 that is included in this start instruction (S1: rotational frequency setting step (series rotational frequency setting step)).

In this rotational frequency setting step (S1), the rotational frequency setting unit 102 determines the rotational frequency of each of the compressors 21A and 21C according to the target temperature or the like of the first refrigerant R. Next, the rotational frequency setting unit 102 resets the rotational frequency of each of the compressor 21A and 21C determined in accordance with the target temperature or the like of the first refrigerant R such that an outflow oil amount FOh from the high-pressure stage compressor 21C belonging to the same compression group 20G becomes smaller than an outflow oil amount FOl from the low-pressure stage compressor 21A, using the information stored in the storage unit 109.

The rotational frequency setting unit 102 first finds the superheat degree $\Delta T$ of the oil reservoir 27 of each of the compressors 21A and 21C. The rotational frequency setting unit 102 acquires the temperature detected by the low-pressure-side thermometer 37A, the temperature detected by the high-pressure-side thermometer 37C, the pressure detected by the low-pressure-side pressure gauge 38A, and the pressure detected by the high-pressure-side pressure gauge 38C via the receiving unit 101 in order to find the superheat degree $\Delta T$.

As described using Equation (1), the superheat degree $\Delta T$ is the temperature distribution of the temperature Td of the oil reservoir 27 with respect to the compressor suction saturated temperature (CSST). Thus, the rotational frequency setting unit 102 finds the CSST in each of the compressors 21A and 21C. The CSST is uniformly determined depending on the pressure of a fluid suctioned by the compressor 21. For this reason, the rotational frequency setting unit 102 finds the CSST of the low-pressure stage compressor 21A using the pressure of the refrigerant R, suctioned by the low-pressure stage compressor 21A, detected by the low-pressure-side pressure gauge 38A. Moreover, the CSST of the high-pressure stage compressor 21C is found using the pressure of the refrigerant R, suctioned by the high-pressure stage compressor 21C, detected by the high-pressure-side pressure gauge 38C. The rotational frequency setting unit 102 subsequently subtracts the CSST of the low-pressure stage compressor 21A from the temperature of the oil reservoir 27 in the low-pressure stage compressor 21A, which is detected by the low-pressure-side thermometer 37A, and finds the superheat degree $\Delta T$ of the reservoir of the low-pressure stage compressor 21A. Moreover, the CSST of the high-pressure stage compressor 21C is subtracted from the temperature of the oil reservoir 27 in the high-pressure stage compressor 21C, which is detected by the high-pressure-side thermometer 37C, and the superheat degree $\Delta T$ of the reservoir in the high-pressure stage compressor 21C is found.

Therefore, a superheat degree acquiring unit in the present embodiment is constituted of the low-pressure-side thermometer 37A, the high-pressure-side thermometer 37C, the low-pressure-side pressure gauge 38A, the high-pressure-side pressure gauge 38C, and one function of the rotational frequency setting unit 102 that finds a superheat degree on the basis of values measured by these measuring instruments.

The rotational frequency setting unit 102 finds the rotational frequency N of the low-pressure stage compressor 21A and the outflow oil amount FOl corresponding to the superheat degree $\Delta T$, using the relationship information of the low-pressure stage compressor 21A stored in the storage unit 109 if the superheat degree $\Delta aT$ of the oil reservoir 27 in each of the compressors 21A and 21C. Specifically, for example, as illustrated in Fig. 5, in a case where the rotational frequency of the low-pressure stage compressor 21A is Nl and the superheat degree of the low-pressure stage compressor 21A is $\Delta T1$, the outflow oil amount $FOl_{(Nl, \Delta T1)}$ corresponding to a rotational frequency Nl and the superheat degree $\Delta T1$ of the low-pressure stage compressor 21A is found using the relationship information $FOl_{\Delta T1a}$ when the low-pressure stage compressor 21A is the superheat degree $\Delta T1$.

Next, the rotational frequency setting unit 102 determines the rotational frequency N of the high-pressure stage compressor 21C at which the outflow oil amount FOh of the high-pressure stage compressor 21C becomes smaller than the outflow oil amount FOl of the low-pressure stage compressor 21A, using the relationship information of the high-pressure stage compressor 21C stored in the storage unit 109. Specifically, for example, as illustrated in Fig. 5, in a case where the outflow oil amount of the low-pressure stage compressor 21A is $FOl_{(Nl, \Delta T1)}$ and the superheat degree of the high-pressure stage compressor 21C is $\Delta T2$, the rotational frequency setting unit 102 first determines the outflow oil amount FOh of the high-pressure stage compressor 21C that is lower by a predetermined amount $\Delta FO$ than the outflow oil amount $FOl_{(Nl, \Delta T1)}$ of the low-pressure stage compressor 21A. Subsequently, a rotational frequency Nh of the high-pressure stage compressor 21C when the outflow oil amount of the high-pressure stage compressor 21C is FOh is determined using the relationship information $FOl_{\Delta T2a}$ when the superheat degree of the high-pressure stage compressor 21C is $\Delta T2$.

From the above, the rotational frequency N of each of the compressors 21A and 21C at which the outflow oil amount FOh from the high-pressure stage compressor 21C becomes smaller than the outflow oil amount FOl from the low-pressure stage compressor 21A is determined. In addition, here, the rotational frequency Nh of the high-pressure stage compressor 21C is determined on the basis of the rotational frequency Nl of the low-pressure stage compressor 21A. However, the rotational frequency Nl of the low-pressure stage compressor 21A may be determined on the basis of the rotational frequency Nh of the high-pressure stage compressor 21C.

If the rotational frequency setting unit 102 determines the rotational frequency N of each of the compressors 21A and 21C for each of the plurality of compression groups 20G, the rotational frequency instruction unit 105 instructs the rotational frequency changers 29A and 29C of the individual compressors 21A and 21C for each of the plurality of compression groups 20G on the rotational frequencies Nl and Nh determined by the rotational frequency setting unit 102 (S2: rotational frequency instruction step (series rotational frequency instruction step)).

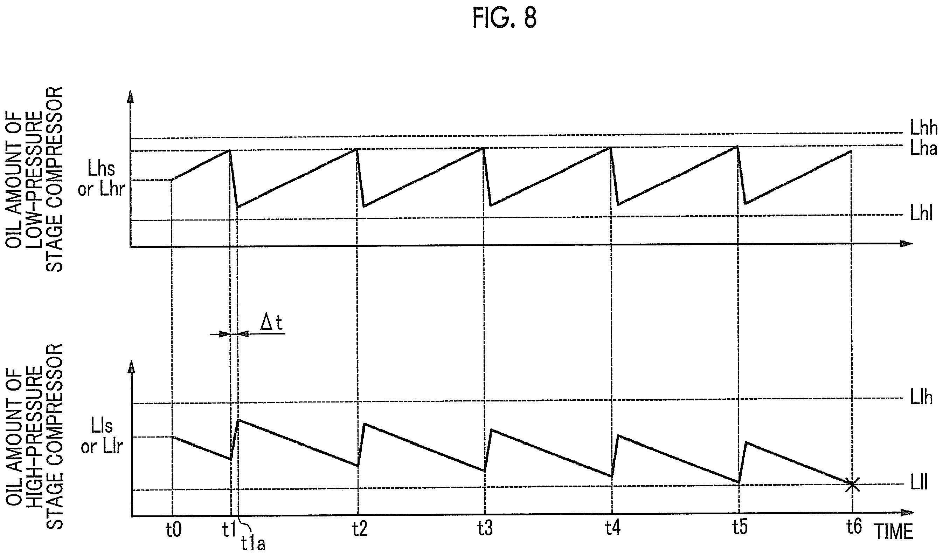

Each rotational frequency changer 29 changes the rotational frequency of the motor 23 of the compressor 21 to the instructed rotational frequency N if the instruction for the rotational frequency N is received from the control device 100. The rotational frequencies Nl and Nh of the individual compressors 21A and 21C determined by the rotational frequency setting unit 102 are rotational frequencies at which the outflow oil amount FOh from the high-pressure stage compressor 21C becomes smaller than the outflow oil amount FOl from the low-pressure stage compressor 21A. For this reason, as illustrated in Fig. 8, the oil amount of the oil reservoir 27 in the low-pressure stage compressor 21A basically decreases with the lapse of time, and conversely, the oil amount of the oil reservoir 27 in the high-pressure stage compressor 21C increases with the lapse of time.

Next, the oil amount estimation unit 104 estimates the oil amount of the oil reservoir 27 in the high-pressure stage compressor 21C in each of the plurality of compression groups 20G (S3: oil amount estimation step of a high-pressure stage compressor). The oil amount of the oil reservoir 27 in the high-pressure stage compressor 21C increases with the lapse of time as mentioned above. As shown in the following Equation (4), an increased amount $\Delta L$ per unit time of this oil amount is a value obtained by subtracting the outflow oil amount FOh per unit time of the high-pressure stage compressor 21C from the outflow oil amount FOl per unit time of the low-pressure stage compressor 21A.

$$\Delta L = FOl - FOh \qquad (4)$$

Thus, the oil amount estimation unit 104 finds the outflow oil amount FOl per unit time of the low-pressure stage compressor 21A, using the temperature detected by the low-pressure-side thermometer 37A, the pressure detected by the low-pressure-side pressure gauge 38A, the rotational frequency of the low-pressure stage compressor 21A, and the relationship information of the low-pressure stage compressor 21A. Moreover, the oil amount estimation unit 104 finds the outflow oil amount FOh per unit time of the high-pressure stage compressor 21C, using the temperature detected by the high-pressure-side thermometer 37C, the pressure detected by the high-pressure-side pressure gauge 38C, the rotational frequency of the high-pressure stage compressor 21C, and the relationship information of the high-pressure stage compressor 21C. Then, the outflow oil amount FOh per unit time of the high-pressure stage compressor 21C is subtracted from the outflow oil amount F0l per unit time of the low-pressure stage compressor 21A, and the increased amount ΔL of the oil amount per unit time in the high-pressure stage compressor 21C is found.

Subsequently, the oil amount estimation unit 104 integrates the increased amount ΔL of the oil amount per unit time from the increase start time of the oil amount of the oil reservoir 27 in the high-pressure stage compressor 21C to the present time, and finds an increased amount $\sum\Delta L$ of the oil amount from the increase start time of the oil amount of the oil reservoir 27 in the high-pressure stage compressor 21C to the present time. Then, the oil amount estimation unit 104 adds the increased amount $\sum\Delta L$ to the oil amount at the increase start time of the oil amount, and estimates an oil amount $L_h(t)$ of the oil reservoir 27 in the high-pressure stage compressor 21C at the present time. In addition, the oil amount at the increase start time of the oil amount is the aforementioned initial oil amount Lhs, the oil amount Lhr immediately after the completion of the oil return operation to be described below, the oil amount immediately after the oil equalization operation, or the like.

Next, the oil amount estimation unit 104 estimates the oil amount of the oil reservoir 27 in the low-pressure stage compressor 21A in each of the plurality of compression groups 20G (S4: oil amount estimation step of the low-pressure stage compressor 21A). A method for estimating the oil amount of the oil reservoir 27 in the high-pressure stage compressor 21C will be described below.

If the oil amount estimation unit 104 estimates the oil amount of the oil reservoir 27 in the low-pressure stage compressor 21A for each of the plurality of compression groups 20G, the oil amount determination unit 103 determines whether or not an oil amount Ll of the low-pressure stage compressor 21A becomes equal to or smaller than the lower limit value Lll determined in advance in each of the plurality of compression groups 20G (S5: lower limit value determining step of a low-pressure stage compressor). If the oil amount determination unit 103 determines that the oil amount Ll of the low-pressure stage compressor 21A of any compression group 20G becomes equal to or smaller than the lower limit value Lll, an oil return processing step (S10) of notifying the rotational frequency instruction unit 105 and the expansion valve instruction unit 107 of the event, and returning the oil O diffused into the circulation line 10 into the low-pressure stage compressor 21A of each compression group 20G is executed. On the other hand, if the oil amount determination unit 103 determines that the oil amounts Ll of the low-pressure stage compressors 21A of all the compression groups 20G are not equal to or smaller than the lower limit value Lll, whether or not the oil amount Lh of the high-pressure stage compressor 21C becomes the upper limit value Lha determined in advance for each of the plurality of compression groups 20G is determined (S6: upper limit value determining step of a high-pressure stage compressor).

If the oil amount Lh of the high-pressure stage compressor 21C is not the upper limit value Lha, the process returns to the rotational frequency setting step (S1). On the other hand, if the oil amount Lh of the high-pressure stage compressor 21C is the upper limit value Lha, the oil amount determination unit 103 notifies the oil equalization valve instruction unit 106 of the event. If the oil equalization valve instruction unit 106 receives this notification from the oil amount determination unit 103, the oil equalization valve instruction unit 106 instructs the oil equalization valve 35 of the same compression group 20G as the high-pressure stage compressor 21C to be opened by a predetermined time (S7: series oil amount equalization processing step). The oil equalization valve 35 is opened for the predetermined time as receiving this instruction, and is closed after that.

The pressure within the housing 24 of the high-pressure stage compressor 21C is higher than the pressure within the housing 24 of the low-pressure stage compressor 21A of the same compression group 20G. For this reason, if the oil equalization valve 35 of the same compression group 20G is opened, the oil O reserved in the oil reservoir 27 of the high-pressure stage compressor 21C starts to flow into the oil reservoir 27 of the low-pressure stage compressor 21A via the series oil equalization line 34 and the oil equalization valve 35. As a result, as illustrated in Fig. 8, the oil amount within the high-pressure stage compressor 21C decreases gradually from an opening time t1 of the oil equalization valve 35, while the oil amount within the low-pressure stage compressor 21A increases gradually.

The inflow rate of the oil O per unit time into the low-pressure stage compressor 21A is determined depending on a pressure difference between the pressure within the housing 24 of the high-pressure stage compressor 21C and the pressure within the housing 24 of the low-pressure stage compressor 21A, and the flow path resistances of the series oil equalization line 34 and the oil equalization valve 35. The flow path resistances of the series oil equalization line 34 and the oil equalization valve 35 are fixed values. The pressure difference between the pressure within the housing 24 of the high-pressure stage compressor 21C and the pressure within the housing 24 of the low-pressure stage compressor 21A is also substantially constant. Thus, in the present embodiment, assuming that the inflow rate of the oil O per unit time, which is determined in accordance with the pressure difference and the flow path resistances, is constant, the time until the oil amount that actually flows into the low-pressure stage compressor 21A reaches a target oil amount is determined, the oil equalization valve 35 is opened for this time Δt. That is, as illustrated in Fig. 8, assuming that the oil equalization valve 35 is opened at the time t1, the oil equalization valve 35 is closed if a time t1a after Δt time from this time t1 is reached. In addition, the pressure within the housing 24 of the high-pressure stage compressor 21C and the pressure within the housing 24 of the low-pressure stage compressor 21A may be detected by pressure gauges, respectively, and the time for which the oil equalization valve 35 is opened may be determined in accordance with the pressure difference.

As a result, the oil amount of the high-pressure stage compressor 21C decreases from the upper limit value Lha, and, for example, becomes an oil amount smaller than the initial oil amount Lhs of the high-pressure stage compressor 21C and larger than the lower limit value Lhl of the oil amount of the high-pressure stage compressor 21C. In addition, the upper limit value Lha herein is a value smaller than an upper limit value Lhh determined from a viewpoint of the operation of the high-pressure stage compressor 21C, and is an upper limit value used as a threshold value for feeding the oil O within the high-pressure stage compressor 21C into the low-pressure stage compressor 21A. On the other hand, the oil amount of the low-pressure stage compressor 21A, for example, increases from an oil amount smaller than the initial oil amount Lls of the low-pressure stage compressor 21A, and for example, and become an oil amount larger than the initial oil amount Lls of the low-pressure stage compressor 21A and smaller than the upper limit value Llh of the oil amount of the low-pressure stage compressor 21A.

Thereafter, if the receiving unit 101 receives an operation stop instruction (S8), the receiving unit 101 notifies the oil equalization valve instruction unit 106 and the rotational frequency instruction unit 105 of the event, and makes these units execute stop processing (S9: stop processing). If this notification is received, the oil equalization valve instruction unit 106 instructs the oil equalization valve 35 for each of the plurality of compression groups 20G to be opened for the predetermined time Δt. As a result, all the oil equalization valves 35 are temporarily opened. Thereafter, the rotational frequency instruction unit 105 instructs the rotational frequency changers 29A and 29C of the individual compressors 21A and 21C for each of the plurality of compression groups 20G on the rotational frequency 0, that is, stop. As a result, all the compressors 21A and 21C are stopped.

On the other hand, if the receiving unit 101 does not receive the operation stop instruction (S8), the process returns to the rotational frequency setting step (S1). Then, Steps S1 to S8 that have been described above will be repeatedly executed. In this process, within the high-pressure stage compressor 21C, as illustrated in Fig. 8, an increase in oil amount, and a decrease in oil amount resulting from the execution of a series oil amount equalization step (S7) are repeated. Additionally within the low-pressure stage compressor 21A, a decrease in oil amount, and an increase in oil amount resulting from the execution of the series oil amount equalization step (S7) are repeated.

Meanwhile, the oil amount of the high-pressure stage compressor 21C returns to the upper limit value Lha of the high-pressure stage compressor 21C even if the series oil amount equalization step (S7) is repeatedly executed. On the other hand, regarding the low-pressure stage compressor 21A, the oil amount immediately after the execution of the series oil amount equalization step (S7) decreases whenever the series oil amount equalization step is executed (S7). This is because the oil O is diffused by the outflow oil amount FOh from the high-pressure stage compressor 21C into the remaining line in the circulation line 10 from the inside of a line system of the multistage compression device 20. For this reason, even the oil amount of the low-pressure stage compressor 21A is increased in the series oil amount equalization step (S7), the oil amount of the low-pressure stage compressor 21A reaches the lower limit value Lll after a plurality of times of execution of the series oil amount equalization step (S7).

Thus, in the present embodiment, the oil amount estimation step (S4) of the low-pressure stage compressor 21A and the lower limit value determining step (S5) of the low-pressure stage compressor 21A among Steps S1 to S8 that have been described are executed for each of the plurality of compression groups 20G. Also, in the present embodiment, if the oil amount of the low-pressure stage compressor 21A in any compression group 20G becomes equal to or smaller than the lower limit value Lll in the lower limit value determining step (S5) of the low-pressure stage compressor 21A, the oil return processing step (S10) is executed.

The oil amount per unit time, which is diffused into the remaining line in the circulation line 10 from the inside of the line system of the multistage compression device 20, is the outflow oil amount FOh per unit time from the high-pressure stage compressor 21C as mentioned above. For this reason, as shown in the following Equation (5), a total oil amount $L_{total}(t)$ obtained by summing up the oil amount of the low-pressure stage compressor 21A and the oil amount of the high-pressure stage compressor 21C at the present time is a value, which is obtained by subtracting the value $\Sigma FOh$ obtained by integrating the outflow oil amount FOh per unit time from the high-pressure stage compressor 21C for the time from the oil return operation to the present time, from a total oil amount (Llr + Lhr) by summing up the oil amount Llr of the low-pressure stage compressor 21A and the oil amount Lhr of the high-pressure stage compressor 21C immediately after the oil return operation performed recently.

$$L_{total}(t) = (Llr + Lhr) - \Sigma FOh \qquad (5)$$

Additionally, as shown in the following Equation (6), the oil amount $L_l(t)$ of the low-pressure stage compressor 21A at the present time is a value obtained by subtracting the oil amount $L_h(t)$ of the high-pressure stage compressor 21C at the present time from the total oil amount $L_{total}(t)$ at the present time.

$$L_l(t) = L_{total}(t) - L_h(t) \qquad (6)$$

Thus, the oil amount estimation unit 104 executes computation of the above Equations (5) and (6), and finds the oil amount $L_l(t)$ of the low-pressure stage compressor 21A at the present time (S4: oil amount estimation step of the low-pressure stage compressor 21A). Here, the oil amount estimation unit 104 acquires the oil amount Llr of the low-pressure stage compressor 21A and the oil amount Lhr of the high-pressure stage compressor 21C immediately after the oil return operation in Equation (5), from the storage unit 109. Additionally, the oil amount estimation unit 104 uses the outflow oil amount FOh found in the process of estimating the oil amount $L_h(t)$ of the high-pressure stage compressor 21C at the present time in the oil amount estimation step (S3) of the high-pressure stage compressor 21C, as the outflow oil amount FOh per unit time of the high-pressure stage compressor 21C in Equation (5). Moreover, the oil amount estimation unit 104 uses the oil amount $L_h(t)$ of the high-pressure stage compressor 21C at the present time, which has been found in the oil amount estimation step (S3) of the high-pressure stage compressor 21C, as oil amount $L_h(t)$ of the high-pressure stage compressor 21C at the present time in Equation (6). In addition, in the present embodiment, the oil amount estimation unit 104 acquires the oil amount within the uppermost stream compressor 21A, an uppermost stream oil amount acquiring unit is constituted of the oil amount estimation unit 104.

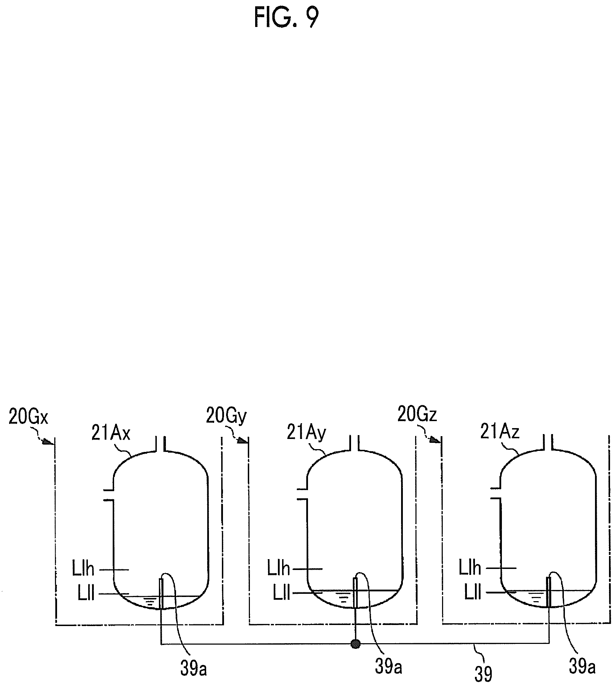

If the oil amount estimation unit 104 estimates the oil amount of the oil reservoir 27 in the low-pressure stage compressor 21A, as mentioned above, the oil amount determination unit 103 determines whether the oil amount Ll of the low-pressure stage compressor 21A becomes equal to or smaller than the lower limit value Lll for each of the plurality of compression groups 20G (S5: lower limit value determining step of a low-pressure stage compressor). If the oil amount determination unit 103 determines that the oil amounts Ll of the low-pressure stage compressors 21A in all the compression groups 20G are not equal to or smaller than the lower limit value Lll, as mentioned above, the upper limit value determining step (S6) of the high-pressure stage compressor 21C is executed for each of the plurality of compression groups 20G. On the other hand, as illustrated in Fig. 9, if the oil amount determination unit 103 determines that the oil amount Ll of the low-pressure stage compressor 21A of any compression group 20G becomes equal to or smaller than the lower limit value Lll, the rotational frequency instruction unit 105 and the expansion valve instruction unit 107 are notified of the event. If the notification is received from the oil amount determination unit 103, the rotational frequency instruction unit 105 instructs the corresponding rotational frequency changers 29A and 29C on predetermined rotational frequencies for the oil return operation with respect to the individual compressors 21A and 21C for each of the plurality of compression groups 20G. As a result, the rotational frequencies of the individual compressors 21A and 21C become the rotational frequencies for the oil return operation. Additionally, if the notification is received from the oil amount determination unit 103, the expansion valve instruction unit 107 instructs the expansion valve 3 on a predetermined valve opening degree for the oil return operation. As a result, the expansion valve 3 becomes the valve opening degree for the oil return operation (S10: oil return processing step). Therefore, in the present embodiment, an oil return operation instruction unit is constituted of the rotational frequency instruction unit 105 and the expansion valve instruction unit 107.

In addition, here, in order to execute the oil return operation, the rotational frequency of each of the compressors 21A and 21C and the valve opening degree of the expansion valve 3 are adjusted. However, there are various well-known methods for the oil return operation. For this reason, in the oil return processing step (S10), the oil return operation may be executed by other well-known methods.

If the oil return processing, in other words, the oil return operation is executed, the oil O diffused into the circulation line 10 returns into the low-pressure stage compressor 21A for each of the plurality of compression groups 20G, and as illustrated in (a) of Fig. 10, the oil amount of the low-pressure stage compressor 21A becomes an oil amount larger than the lower limit value Lll of the oil amount of each low-pressure stage compressor 21A. However, the oil amounts of the individual low-pressure stage compressors 21A are different from each other. This is because the resistance or the like of the suction line 16 connected to the suction port 25 of the low-pressure stage compressor 21A or the accumulator 31 arranged in the suction line 16 varies in the plurality of compression groups 20G, respectively. Here, as a result of the oil return operation, as illustrated in (a) of Fig. 10, it is assumed that the oil level within a first low-pressure stage compressor 21Ax is higher than the lower limit value Lll but becomes lower than the position of the opening 39a of the parallel oil equalization line 39. It is assumed that the oil level within a second low-pressure stage compressor 21Ay becomes higher than the lower limit value Lll and becomes higher than the position of the opening 39a of the parallel oil equalization line 39. Additionally, it is assumed that the oil level within a third low-pressure stage compressor 21Az is higher than the lower limit value Lll but becomes lower than the position of the opening 39a of the parallel oil equalization line 39.

In addition, the first low-pressure stage compressor 21Ax is the low-pressure stage compressor 21A belonging to a first compression group 20Gx among the plurality of compression groups 20G. The second low-pressure stage compressor 21Ay is the low-pressure stage compressor 21A belonging to a second compression group 20Gy among the plurality of compression groups 20G. The third low-pressure stage compressor 21Az is the low-pressure stage compressor 21A belonging to a third compression group 20Gz among the plurality of compression groups 20G.

Thus, in the present embodiment, a parallel oil amount equalization processing step (S11) is executed after the oil return processing step (S10).

In the parallel oil amount equalization processing step (S11), first, the rotational frequency setting unit 102 determines at least one rotational frequency among the rotational frequency of the first low-pressure stage compressor 21Ax and the rotational frequencies of all the remaining low-pressure stage compressors 21A such that the pressure within the first low-pressure stage compressor 21Ax becomes lower than the pressures within all the remaining low-pressure stage compressors 21A among the low-pressure stage compressors 21A for the plurality of individual compression groups 20G. For example, the rotational frequency of the first low-pressure stage compressor 21Ax is made relatively higher than the rotational frequencies of all the remaining low-pressure stage compressors 21Ay and 21Az. As this method, there is a method for making the rotational frequency of the first low-pressure stage compressor 21Ax higher than the current rotational frequency, a method for making the rotational frequencies of all the remaining low-pressure stage compressors 21Ay and 21Az lower than the current rotational frequency, or a method for making the rotational frequency of the first low-pressure stage compressor 21Ax higher than the current rotational frequency and making the rotational frequency of all the remaining low-pressure stage compressors 21Ay and 21Az lower than the current rotational frequency.

Similarly, the rotational frequency setting unit 102 determines at least one rotational frequency among the rotational frequency of the second low-pressure stage compressor 21Ay and the rotational frequencies of all the remaining low-pressure stage compressors 21Az and 21Ax such that the pressure within the second low-pressure stage compressor 21Ay becomes lower than the pressures within all the remaining low-pressure stage compressors 21Az and 21Ax. Moreover, the rotational frequency setting unit 102 determines at least one rotational frequency among the rotational frequency of the third low-pressure stage compressor 21Az and the rotational frequencies of all the remaining low-pressure stage compressors 21Ax and 21Ay such that the pressure within the third low-pressure stage compressor 21Az becomes lower than the pressures within all the remaining low-pressure stage compressors 21Ax and 21Ay.

As described above, the rotational frequency setting unit 102 determines at least one rotational frequency among the rotational frequency of one low-pressure stage compressor 21A and the rotational frequencies of all the remaining low-pressure stage compressors 21A such that the pressure within one low-pressure stage compressor 21A becomes lower than the pressures within all the remaining low-pressure stage compressors 21A in all the individual low-pressure stage compressors 21A (S12: rotational frequency setting step).

Next, the rotational frequency instruction unit sequentially instructs the corresponding rotational frequency changers on a rotational frequency at which the pressure within the first low-pressure stage compressor 21Ax may become lower than the pressures within all the remaining low-pressure stage compressors 21Ay and 21Az, a rotational frequency at which the pressure within the second low-pressure stage compressor 21Ay may become lower than the pressures within all the remaining low-pressure stage compressors 21Az and 21Ax, and a rotational frequency at which the pressure within the third low-pressure stage compressor 21Az may become lower than the pressures within all the remaining low-pressure stage compressors 21Ax and 21Ay (S13: rotational frequency instruction step).

As a result, first, the pressure within the first low-pressure stage compressor 21Ax becomes lower than the pressures within all the remaining low-pressure stage compressors 21Ay and 21Az. As mentioned above using (a) of Fig. 10, as the result of the oil return processing step (S10), in a case where the oil level within the second low-pressure stage compressor 21Ay become higher than the lower limit value Lll and becomes higher than the position of the opening 39a of the parallel oil equalization line 39, the oil within the second low-pressure stage compressor 21Ay is suctioned into the first low-pressure stage compressor 21Ax having low pressure as illustrated in (b) of Fig. 10. For this reason, the oil amount within the second low-pressure stage compressor 21Ay decreases, while the oil amount within the first low-pressure stage compressor 21Ax increases. However, if the oil level within the second low-pressure stage compressor 21Ay reaches the position of the opening 39a of the parallel oil equalization line 39 within the second low-pressure stage compressor 21Ay, the oil no longer flows out of the second low-pressure stage compressor 21Ay. Additionally, as mentioned above using (a) of Fig. 10, as a result of the oil return processing step (S10), the oil level within the third low-pressure stage compressor 21Az is higher than the lower limit value Lll. However, in a case where this oil level becomes lower than the position of the opening 39a of the parallel oil equalization line 39, the oil within the third low-pressure stage compressor 21Az is not suctioned into the first low-pressure stage compressor 21Ax having low pressure. That is, as illustrated in (b) of Fig. 10, the oil level within the third low-pressure stage compressor 21Az does not vary.

Next, the pressure within the second low-pressure stage compressor 21Ay becomes lower than the pressures within all the remaining low-pressure stage compressors 21Az and 21Ax. In this case, as illustrated in (c) of Fig. 10, the oil within the first low-pressure stage compressor 21Ax is suctioned into the second low-pressure stage compressor 21Ay having low pressure. For this reason, the oil amount within the first low-pressure stage compressor 21Ax decreases, while the oil amount within the second low-pressure stage compressor 21Ay increases. However, if the oil level within the first low-pressure stage compressor 21Ax reaches the position of the opening 39a of the parallel oil equalization line 39 within the first low-pressure stage compressor 21Ax, the oil no longer flows out of the first low-pressure stage compressor 21Ax. Additionally, although the oil level within the third low-pressure stage compressor 21Az is higher than the lower limit value Lll, this oil level is lower than the position of the opening 39a of the parallel oil equalization line 39. Therefore, the oil within the third low-pressure stage compressor 21Az is not suctioned into the second low-pressure stage compressor 21Ay having low pressure. That is, the oil level within the third low-pressure stage compressor 21Az does not vary similarly to the case where the inside of first low-pressure stage compressor 21Ax is brought to a low pressure.

Finally, the pressure within the third low-pressure stage compressor 21Az becomes lower than the pressures within all the remaining low-pressure stage compressors 21Ax and 21Ay. In this case, as illustrated in (d) of Fig. 10, the oil within the second low-pressure stage compressor 21Ay is suctioned into the third low-pressure stage compressor 21Az having low pressure. For this reason, the oil amount within the second low-pressure stage compressor 21Ay decreases, while the oil amount within the third low-pressure stage compressor 21Az increases. However, if the oil level within the second low-pressure stage compressor 21Ay reaches the position of the opening 39a of the parallel oil equalization line 39 within the second low-pressure stage compressor 21Ay, the oil no longer flows out of the second low-pressure stage compressor 21Ay. Additionally, since the oil level within the first low-pressure stage compressor 21Ax is the level of the position of the opening 39a of the parallel oil equalization line 39, the oil within the first low-pressure stage compressor 21Ax is not suctioned into the third low-pressure stage compressor 21Az having low pressure. That is, the oil level within the first low-pressure stage compressor 21Ax does not vary while remaining at the level of the position of the opening 39a of the parallel oil equalization line 39.

From the above, the parallel oil amount equalization processing step (S11) is completed. As a result of the parallel oil amount equalization processing step, the oil level within the first low-pressure stage compressor 21Ax and the oil level within the second low-pressure stage compressor 21Ay becomes the level of the position of the opening 39a of the parallel oil equalization line 39 (S11). Additionally, the oil level within the third low-pressure stage compressor 21Az becomes a level slightly higher than the position of the opening 39a of the parallel oil equalization line 39 in an example illustrated in (d) of Fig. 10. Therefore, the oil levels within the low-pressure stage compressors 21A for the plurality of individual compression groups 20G become substantially the level of the position of the opening 39a of the parallel oil equalization line 39 through the parallel oil amount equalization processing step (S11). In addition, in the example illustrated in (d) of Fig. 10, as mentioned above, the oil level within the third low-pressure stage compressor 21Az becomes a level slightly higher than the position of the opening 39a of the parallel oil equalization line 39. However, there is also a case where the oil level within the third low-pressure stage compressor 21Az becomes a level slightly lower than the position of the opening 39a of the parallel oil equalization line 39 due to the total amount of the oil within the individual low-pressure stage compressors 21A after the oil return processing step (S10).

If the oil return processing step (S6) is completed, the process returns to the rotational frequency setting step (S1).

As mentioned above, in the present embodiment, the oil amounts within the plurality of low-pressure stage compressors 21A can be adjusted to a predetermined oil amount with simple control and simple line configuration by arranged the opening 39a of the parallel oil equalization line 39 at a predetermined position within the low-pressure stage compressor 21A. For this reason, in the present embodiment, complication of the line configuration can be suppressed, and an increase in facility cost can be suppressed. Moreover, in the present embodiment, an increase in running cost accompanying an increase in piping resistance can also be suppressed.

Additionally, in the present embodiment, the individual compressors 21A and 21C are operated such that the outflow oil amount FOh of the downstream high-pressure stage compressor 21C decreases with respect to the outflow oil amount FOl of the upstream low-pressure stage compressor 21A. For this reason, in the present embodiment, the oil amount of the downstream high-pressure stage compressor 21C reaches the lower limit value Lhl before the oil amount of the upstream low-pressure stage compressor 21A reaches the lower limit value Lll. In other words, in the present embodiment, in a case where the oil amount of any of the compressors 21A and 21C reaches the lower limit value, the compressor becomes the upstream low-pressure stage compressor 21A. Additionally, in the oil return operation, the oil O diffused into the circulation line 10 returns into the high-pressure stage compressor 21C before returning into the low-pressure stage compressor 21A. Therefore, in the present embodiment, even if the oil amount of any of the compressors 21A and 21C reaches the lower limit value, the oil amount of the compressor 21A of which the oil amount reaches the lower limit value can be recovered in a short time by the oil return operation.

In the present embodiment, each of the plurality of compressor 21A and 21C is provided with the oil separator 32A or 32C and the oil return line 33A or 33C. For this reason, in the present embodiment, a decrease in the oil amount of each of the compressors 21A and 21C can be suppressed. Moreover, in the present embodiment, the oil separation efficiency of the high-pressure oil separator 32C for the lowermost stream high-pressure stage compressor 21C is higher than the oil separation efficiency of the low-pressure oil separator 32A for the low-pressure stage compressor 21A. For this reason, in the present embodiment, the amount of the oil O that flows out from the system, through which the refrigerant R of the multistage compression device 20 flows, to the outside can be effectively suppressed.

In the present embodiment, the oil reservoir 27 of the high-pressure stage compressor 21C and the oil reservoir 27 of the low-pressure stage compressor 21A are connected to each other by the series oil equalization line 34. For this reason, in the present embodiment, the oil O that is reserved within the high-pressure stage compressor 21C can be fed into the low-pressure stage compressor 21A via the series oil equalization line 34, and a decrease in oil amount within the low-pressure stage compressor 21A can be suppressed.

In a state where the oil reservoir 27 of the high-pressure stage compressor 21C and the oil reservoir 27 of the low-pressure stage compressor 21A are always communicating with each other by the series oil equalization line 34, the pressure within the high-pressure stage compressor 21C always declines, and the compression efficiency in the high-pressure stage compressor 21C always declines. In the present embodiment, the series oil equalization line 34 is provided with the oil equalization valve 35. For this reason, in the present embodiment, by opening the oil equalization valve 35 only when the need for feeding the oil O, which is reserved within the high-pressure stage compressor 21C, into the low-pressure stage compressor 21A increases, the oil amount within the low-pressure stage compressor 21A can be recovered, and a decline in the compression efficiency in the high-pressure stage compressor 21C can be made temporary.

In the present embodiment, by executing the oil return operation, the oil O diffused into the circulation line 10 can be returned into the lowermost stream high-pressure stage compressor 21C.

"Various Modification Examples"

Various modification examples of the embodiment described above will be illustrated.

In the above embodiment, the parallel oil amount equalization processing step (S11) is executed after the oil return processing step (S10). However, in a case where the oil is reserved up to a level above the opening 39a of the parallel oil equalization line 39 into at least one low-pressure stage compressor 21A among the low-pressure stage compressors 21A for the plurality of individual compression groups 20G, the parallel oil amount equalization processing step (S11) may be executed not even after the oil return processing step (S10).

In the above embodiment, the rotational frequency instruction step (S13) is executed after all the rotational frequencies of the individual low-pressure stage compressors 21A for bringing the low-pressure stage compressors 21A into low pressure for the plurality of individual low-pressure stage compressors 21A in the rotational frequency setting step (S12) of the parallel oil amount equalization processing step (S11). However, whenever the rotational frequencies of the individual low-pressure stage compressors 21A for making one low-pressure stage compressor 21A into low pressure among the plurality of low-pressure stage compressors 21A are found in the rotational frequency setting step (S12), the rotational frequency instruction step may be executed (S13).

The levels of the individual openings 39a of the parallel oil equalization line 39 within the plurality of low-pressure stage compressors 21A does not need to be the same level as one another in the plurality low-pressure stage compressor 21A. That is, predetermined values regarding the oil amounts within the individual low-pressure stage compressors 21A may be predetermined values with respect to the low-pressure stage compressors 21A or may be different from one another in the plurality of low-pressure stage compressor 21A.

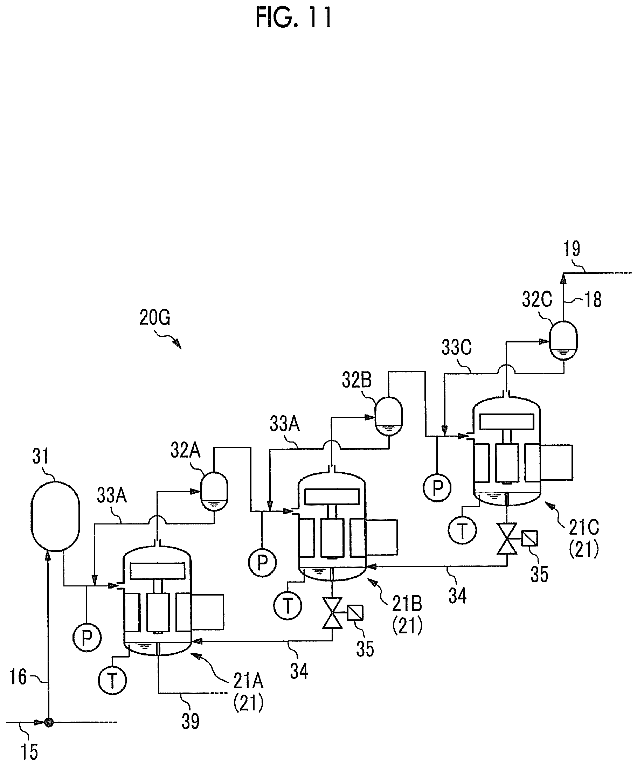

One compression group 20G in the above embodiment is an example in which the two compressors 21A and 21C are arranged in series. However, as the compression groups 20G, three or more compressors may be arranged in series. For example, as illustrated in Fig. 11, three compressors 21A, 21B, and 21C may be arranged in series. Even in this case, by determining the rotational frequencies of the individual compressors such that the outflow oil amount of a downstream compressor decreases with respect to the outflow oil amount of an upstream compressor, the oil amount of the compressor 21A of which oil amount becomes the lower limit value can be recovered in a short time similarly to the above embodiment. In this case, the rotational frequency setting unit 102 determines the rotational frequency of the low-pressure stage compressor 21A and the medium-pressure stage compressor 21B such that an outflow oil amount FLm of the medium-pressure stage compressor 21B arranged downstream of the uppermost stream low-pressure stage compressor 21A decreases with respect to the outflow oil amount FOl of the uppermost stream low-pressure stage compressor 21A. Moreover, the rotational frequency setting unit 102 determines the rotational frequency of the high-pressure stage compressor 21C such that an outflow oil amount FLh of the high-pressure stage compressor 21C arranged downstream of the medium-pressure stage compressor 21B decreases with respect to the outflow oil amount FLm of the medium-pressure stage compressor 21B. In addition, even in this case, after the rotational frequency of the high-pressure stage compressor 21C is determined, the rotational frequency of the medium-pressure stage compressor 21B may be determined, and finally, the rotational frequency of the low-pressure stage compressor 21A may be determined.

Additionally, even in a case where the three or more compressors are arranged in series, it is preferable to provide an oil separator downstream of each compressor and connect each oil separator and a corresponding compressor to each other by an oil return line. Even in this case, it is preferable that the oil separation efficiency of the oil separator for the downstream compressor is made higher than the oil separation efficiency of the oil separator for the downstream compressor. For example, as illustrated in Fig. 11, in a case where the three compressors 21A, 21B, and 21C are arranged in series, the low-pressure oil separator 32A is provided downstream of the low-pressure stage compressor 21A, and the low-pressure oil separator 32A and the low-pressure stage compressor 21A are connected to each other by the low-pressure oil return line 33A. A medium-pressure oil separator 32B is provided downstream of the medium-pressure stage compressor 21B, and the medium-pressure oil separator 32B and the medium-pressure stage compressor 21B are connected to each other by a medium-pressure oil return line 33B. Moreover, the high-pressure oil separator 32C is provided downstream of the high-pressure stage compressor 21C, and the high-pressure oil separator 32C and the high-pressure stage compressor 21C are connected to each other by the high-pressure oil return line 33C. Additionally, also in the example illustrated in Fig. 11, it is preferable that the oil separation efficiency of the downstream medium-pressure oil separator 32B is made higher than the oil separation efficiency of the upstream low-pressure oil separator 32A and the oil separation efficiency of the downstream high-pressure oil separator 32C is made higher than the oil separation efficiency of the medium-pressure oil separator 32B.

The multistage compression device 20 of the above embodiment includes the three compression groups 20G. However, the multistage compression device may include two compression groups 20G, or may include four or more compression groups.

In the above embodiment, the oil amount estimation unit 104 is exemplified as the oil amount acquiring unit that acquires the amount of the oil reserved in the compressor 21. However, the oil amount acquiring unit may be a liquidometer or liquid level meter that detects amount of the oil reserved in the compressor 21.

In the above embodiment, the series oil equalization line 34 is provided with the oil equalization valve 35. However, the oil equalization valve 35 is not necessarily provided in the series oil equalization line 34. However, in a case where the oil equalization valve 35 is not provided, the compression efficiency of the high-pressure stage compressor 21C is always brought into a declining state as mentioned above. For this reason, in a case where the decline in the compression efficiency of the high-pressure stage compressor 21C is suppressed, similarly to the present embodiment, it is preferable to provide the oil equalization valve 35 in the series oil equalization line 34.

In the above embodiment, the oil amount estimation step (S3) of the high-pressure stage compressor 21C is executed before the oil amount estimation step (S4) of the low-pressure stage compressor 21A. However, as long as the oil amount estimation step (S3) of the high-pressure stage compressor 21C is performed after a rotational frequency instruction step (S2) and before the upper limit value determining step (S6) of the high-pressure stage compressor 21C, the oil amount estimation step (S3) may be performed at any timing.

The refrigeration cycle in the above embodiment includes the four-way switching valve 4. As mentioned above, the four-way switching valve 4 is provided in order to perform switching between a case where the first heat exchanger 1 is made to function as a condenser and a case where the first heat exchanger 1 is made to function as an evaporator. For this reason, in a case where the first heat exchanger 1 is made to function exclusively as the condenser or in a case where the first heat exchanger 1 is made to function exclusively as the evaporator, the four-way switching valve 4 is unnecessary.

Industrial Applicability

According to the aspect of the invention, the oil amounts of the individual compressors can be adjusted to predetermined oil amounts while suppressing facility costs and running costs.

Reference Signs List

1: first heat exchanger
2: second heat exchanger
3: expansion valve
4: four-way switching valve
10: circulation line
11: first line
12: second line
13: third line
14: compression line
15: shared suction line
16: suction line
17: low-pressure ejection line (in-group coupling line)
18: high-pressure ejection line
19: shared ejection line
20: multistage compression device
20G: compression group
20Gx: first compression group
20Gy: second compression group
20Gz: third compression group

21: compressor
21A: low-pressure stage compressor (uppermost stream compressor)
21Ax: first low-pressure stage compressor
21Ay: second low-pressure stage compressor
21Az: third low-pressure stage compressor
21B: medium-pressure stage compressor
21C: high-pressure stage compressor
22: compression part
23: motor
24: housing
25: suction port
26: ejection port
27: oil reservoir
29: rotational frequency changer
29A: low-pressure-side rotational frequency changer
29C: high-pressure-side rotational frequency changer
31: accumulator
32: oil separator
32A: low-pressure oil separator
32B: medium-pressure oil separator
32C: high-pressure oil separator
33: oil return line
33A: low-pressure oil return line
33B: medium-pressure oil return line
33C: high-pressure oil return line
34: series oil equalization line
35: oil equalization valve
37A: low-pressure-side thermometer
37C: high-pressure-side thermometer
38A: low-pressure-side pressure gauge
38C: high-pressure-side pressure gauge
39: parallel oil equalization line
100: control device
101: receiving unit
102: rotational frequency setting unit
103: oil amount determination unit
104: oil amount estimation unit
105: rotational frequency instruction unit
106: oil equalization valve instruction unit
107: expansion valve instruction unit
108: switching valve instruction unit
109: storage unit

Claims

1. A multistage compression device comprising:

a plurality of compression groups arranged in parallel in a circulation line for a refrigerant;
a parallel oil equalization line that connects the plurality of compression groups to one another; and
a control device,
wherein the plurality of compression groups each include
a plurality of compressors arranged in series, an in-group coupling line that constitutes a portion of the circulation line to allow the refrigerant to flow therethrough, connects the plurality of compressors to one another, and is not connected to any compressors constituting other compression groups, a series oil equalization line that connects the plurality of compressors to one another, and a rotational frequency changer that is provided for each of the plurality of compressors and changes the rotational frequency of the compressor,
wherein the compressor has a compression part that compresses the refrigerant and has a rotational frequency

**EP 3 385 640 A1**

changed by the rotational frequency changer, and a housing that covers the compression part and reserves oil required for driving of the compression part,

wherein the housing is formed with a suction port that suctions the refrigerant, an ejection port that ejects the refrigerant compressed by the compression part together with the oil, and an oil reservoir in which the oil is reserved,

wherein the series oil equalization line has a first end connected to the oil reservoirs for all the individual compressors excluding uppermost stream compressors among the plurality of compressors and has a second end connected to the oil reservoir of a compressor adjacent to an upstream side of a compressor serving as a connection source of the first end within the same compression group as the compressor serving as the connection source,

wherein the parallel oil equalization line connects the oil reservoirs in the uppermost stream compressors for the plurality of individual compression groups to one another,

wherein a connection end of the parallel oil equalization line connected to the oil reservoir of each of the uppermost stream compressors is open at a position where the amount of oil reserved in the oil reservoir becomes a predetermined amount between an upper limit value and a lower limit value,

wherein the control device has

a rotational frequency setting unit that determines a rotational frequency or rotational frequencies of at least one of a rotational frequency of one uppermost stream compressor and rotational frequencies of all remaining uppermost stream compressors such that a pressure within the housing of the one uppermost stream compressor becomes lower than pressures within the housings of all the remaining the uppermost stream compressors for the plurality of individual uppermost stream compressors in a case where the oil is reserved up to a level above the opening in the oil reservoir of at least one uppermost stream compressor among the uppermost stream compressors for the plurality of individual compression groups, and

a rotational frequency instruction unit that sequentially instructs the corresponding rotational frequency changers on the rotational frequency or rotational frequencies of the one compressor or the remaining uppermost stream compressors that are determined by the rotational frequency setting unit for each of the plurality of uppermost stream compressors.

2. The multistage compression device according to Claim 1,
wherein the control device has a storage unit in which, for all the individual compressors constituting the plurality of compression groups, a relationship between operational states of the compressors and outflow oil amounts per unit time of the oil including rotational frequencies of the compressors is stored,

wherein the rotational frequency setting unit determines rotational frequencies of the plurality of individual compressors, using the relationship for the plurality of individual compressors constituting each compression group, such that an outflow oil amount of a downstream compressor among the plurality of compressors constituting each compression group decreases with respect to an outflow oil amount of an upstream compressor, and

wherein the rotational frequency instruction unit instructs the corresponding rotational frequency changers, respectively, on the rotational frequencies of the plurality of individual compressors constituting each compression group, which are determined by the rotational frequency setting unit.

3. The multistage compression device according to Claim 1 or 2, further comprising:
an oil equalization valve that is provided for each of a plurality of the series oil equalization lines, and adjusts a flow rate of the oil that flows through the series oil equalization line.

4. The multistage compression device according to Claim 3,
wherein the control device has

an oil amount acquiring unit that acquires amounts of the oil reserved in the oil reservoirs for all the individual compressors excluding uppermost stream compressors among the plurality of compressors constituting each compression group, and

an oil equalization valve instruction unit that gives an opening instruction to a target oil equalization valve provided in the series oil equalization line that connects the oil reservoir of the target compressor and the oil reservoir of a compressor adjacent to an upstream side of the target compressor to each other if an oil amount in the oil reservoir of a target compressor that is any compressor, among oil amounts of one or more compressors acquired in the oil amount acquiring unit, reaches a predetermined upper limit value.

5. The multistage compression device according to any one of Claims 1 to 4, further comprising:

an oil separator that is provided for each of the plurality of compressors constituting each compression group

21

and separates the oil from the refrigerant ejected from the compressor before the refrigerant ejected from the compressor flows into other compressors, and

an oil return line that returns the oil separated by the oil separator into the housing of the compressor corresponding to the oil separator.

**6.** The multistage compression device according to Claim 5,
wherein an oil separation efficiency of the oil separator for a downstream compressor among the oil separators for the plurality of individual compressors constituting each compression group is higher than an oil separation efficiency of an oil separator for an upstream compressor.

**7.** The multistage compression device according to any one of Claims 1 to 6,
wherein the control device has
an uppermost stream oil amount acquiring unit that acquires amounts of the oil reserved within the uppermost stream compressors for the plurality of individual compression groups, respectively, and
an oil return operation instruction unit that instructs any device connected to the circulation line such that the oil in the circulation line is capable of returning into the plurality of uppermost stream compressors if an oil amount within at least one uppermost stream compressor among the oil amounts acquired by the uppermost stream oil amount acquiring unit reaches a predetermined lower limit value.

**8.** A refrigeration cycle comprising:

the multistage compression device according to any one of Claims 1 to 7;
a first heat exchanger that is arranged in the circulation line and allows heat exchange between the refrigerant flowing through the circulation line and a first medium to change the phase of the refrigerant;
a second heat exchanger that is arranged in the circulation line, allows heat exchange between the refrigerant flowing through the circulation line and a second medium to change the phase of the refrigerant; and
an expansion valve that is arranged at a portion in the circulation line where the multistage compression device is not arranged between the first heat exchanger and the second heat exchanger, in the circulation line between the first heat exchanger and the second heat exchanger.

**9.** An operation method for a multistage compression device, the multistage compression device including
a plurality of compression groups arranged in parallel in a circulation line for a refrigerant, and
a parallel oil equalization line that connects the plurality of compression groups to one another,
wherein the plurality of compression groups each include
a plurality of compressors arranged in series, an in-group coupling line that constitutes a portion of the circulation line to allow the refrigerant to flow therethrough, connects the plurality of compressors to one another, and is not connected to any compressors constituting other compression groups, a series oil equalization line that connects the plurality of compressors to one another, and a rotational frequency changer that is provided for each of the plurality of compressors and changes the rotational frequency of the compressor,
wherein the plurality of compressors each have a compression part that compresses the refrigerant and has a rotational frequency changed by the rotational frequency changer, and a housing that covers the compression part and reserves oil required for driving of the compression part,
wherein the housing is formed with a suction port that suctions the refrigerant, an ejection port that ejects the refrigerant compressed by the compression part together with the oil, and an oil reservoir in which the oil is reserved,
wherein the series oil equalization line has a first end connected to the oil reservoirs for all the individual compressors excluding uppermost stream compressors among the plurality of compressors and has a second end connected to the oil reservoir of a compressor adjacent to an upstream side of a compressor serving as a connection source of the first end within the same compression group as the compressor serving as the connection source,
wherein the parallel oil equalization line connects the oil reservoirs in the uppermost stream compressors for the plurality of individual compression groups to one another, the operation method
making a connection end of the parallel oil equalization line connected to the oil reservoir of each of the uppermost stream compressors is made to be open at a position where the amount of oil reserved in the oil reservoir becomes a predetermined amount between an upper limit value and a lower limit value, and
executing a rotational frequency setting step of determining a rotational frequency or rotational frequencies of at least one of a rotational frequency of one uppermost stream compressor, and rotational frequencies of all remaining uppermost stream compressors such that a pressure within the housing of the one uppermost stream compressor become lower than pressures within the housings of all the remaining the uppermost stream compressors for the plurality of individual uppermost stream compressors in a case where the oil is reserved up to a level above the opening in the oil reservoir of at least one uppermost stream compressor among the uppermost stream compressors for the plurality of individual compression groups, and

a rotational frequency instruction step that sequentially instructs the corresponding rotational frequency changers on the rotational frequency or rotational frequencies of the one compressor or the remaining uppermost stream compressors that are determined in the rotational frequency setting step for each of the plurality of uppermost stream compressors.

10. The operation method for a multistage compression device according to Claim 9, further executing

a series rotational frequency setting step of determining rotational frequencies of the plurality of individual compressors, using a relationship between operational states of the compressors and outflow oil amounts per unit time of the oil including rotational frequencies of the compressors, for all the individual compressors constituting the plurality of compression groups, such that an outflow oil amount of a downstream compressor among the plurality of compressors constituting each compression group decreases with respect to an outflow oil amount of an upstream compressor; and

a rotational frequency instruction step of instructing the corresponding rotational frequency changers, respectively, on the rotational frequencies of the plurality of individual compressors constituting each compression group, which are determined in the series rotational frequency setting step.

11. The operation method for a multistage compression device according to Claims 9 or 10, further executing:

an uppermost stream oil amount acquiring step of acquiring amounts of the oil reserved within the plurality of uppermost stream compressors, respectively, and

an oil return operation instruction step of instructing any device connected to the circulation line such that the oil in the circulation line is capable of returning into the plurality of uppermost stream compressors if an oil amount within at least one uppermost stream compressor among the oil amounts acquired in the uppermost stream oil amount acquiring step reaches a predetermined lower limit value.

# FIG. 1

CONTROL DEVICE

EP 3 385 640 A1

# FIG. 2

## FIG. 3

# FIG. 4

# FIG. 5

# FIG. 6

# FIG. 7

START

SETTING OF ROTATIONAL FREQUENCY — S1

INSTRUCTION ON ROTATIONAL FREQUENCY — S2

ESTIMATION OF OIL AMOUNT OF
HIGH-PRESSURE STAGE COMPRESSOR — S3

ESTIMATION OF OIL AMOUNT OF LOW-PRESSURE
STAGE COMPRESSOR — S4

S5
NO ◁ $Ll \leq Lll$ ? ▷

YES

OIL RETURN PROCESSING — S10

— S11
SETTING OF ROTATIONAL FREQUENCY — S12

INSTRUCTION ON ROTATIONAL FREQUENCY — S13

S6
$Lh \geq Lha$ ? ▷ NO

YES

SERIES OIL AMOUNT EQUALIZATION PROCESSING — S7

S8
RECEPTION
OF STOP INSTRUCTION? ▷ NO

YES

STOP PROCESSING — S9

END

FIG. 8

# FIG. 9

EP 3 385 640 A1

# FIG. 10

32

# FIG. 11

## INTERNATIONAL SEARCH REPORT

| International application No. |
|---|
| PCT/JP2017/012258 |

**A. CLASSIFICATION OF SUBJECT MATTER**
*F25B1/10*(2006.01)i, *F25B1/00*(2006.01)i, *F25B49/02*(2006.01)i

According to International Patent Classification (IPC) or to both national classification and IPC

**B. FIELDS SEARCHED**

Minimum documentation searched (classification system followed by classification symbols)
F25B1/10, F25B1/00, F25B49/02

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 2010/0071391 A1 (CARRIER CORP.), 25 March 2010 (25.03.2010), fig. 3B & WO 2008/079128 A1 & EP 2097686 A1 & CN 101568770 A | 1-11 |
| A | JP 7-35425 A (Mitsubishi Heavy Industries, Ltd.), 07 February 1995 (07.02.1995), paragraphs [0020] to [0021]; fig. 1, 6 (Family: none) | 1-11 |
| A | JP 2005-188816 A (Samsung Electronics Co., Ltd.), 14 July 2005 (14.07.2005), paragraphs [0019] to [0025]; fig. 1 to 2 & KR 10-2005-0065257 A | 1-11 |

☒ Further documents are listed in the continuation of Box C.  ☐ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search <br> 23 May 2017 (23.05.17) | Date of mailing of the international search report <br> 06 June 2017 (06.06.17) |
|---|---|
| Name and mailing address of the ISA/ <br> Japan Patent Office <br> 3-4-3,Kasumigaseki,Chiyoda-ku, <br> Tokyo 100-8915,Japan | Authorized officer <br><br> Telephone No. |

Form PCT/ISA/210 (second sheet) (January 2015)

34

**INTERNATIONAL SEARCH REPORT**

| International application No. |
| --- |
| PCT/JP2017/012258 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2005-351544 A  (Samsung Electronics Co., Ltd.), 22 December 2005 (22.12.2005), paragraphs [0032] to [0046]; fig. 1 to 10 & US 2005/0279111 A1 fig. 1 to 10; paragraphs [0066] to [0082] & EP 1605212 A2        & KR 10-2005-0117469 A & CN 1707201 A | 1-11 |
| A | US 5839886 A  (SHAW, David N.), 24 November 1998 (24.11.1998), fig. 5 & WO 1997/043585 A1     & AU 2931697 A | 1-11 |
| A | US 3500962 A  (KOCHER, Erich J.), 17 March 1970 (17.03.1970), fig. 1 (Family: none) | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016063568 A

- JP 7301465 A